# FASCICULE DE BREVET EUROPEEN

(11) **EP 4 051 435 B1**
(45) Date de publication et mention de la délivrance du brevet: **30.08.2023**
(21) Numéro de dépôt: 20807471.6
(22) Date de dépôt: 22.10.2020
(51) Int. Cl.: B03B 9/06

(54) **INSTALLATION DE TRAITEMENT A TRI DENSIMETRIQUE OPTIMISE ET PROCEDE DE TRAITEMENT AFFERENT**
BEHANDLUNGSANLAGE MIT OPTIMIERTER DENSITOMETRISCHER SORTIERUNG UND ENTSPRECHENDES BEHANDLUNGSVERFAHREN
TREATMENT PLANT WITH OPTIMISED DENSIMETRIC SORTING AND RELATED TREATMENT PROCESS

(30) Priorité: 29.10.2019 FR 1912159
(43) Date de publication de la demande: 07.09.2022
(73) Titulaire: Avenir Innovation, 43270 Allegre (FR)
(72) Inventeur: CHARREYRE, Fabien, Michel, Alain, 43000 LE-PUY-EN-VELAY (FR)
(74) Mandataire: Jovelet, Julien Jean-Claude Raymond
(86) Numéro de dépôt international: PCT/FR2020/051908
(87) Numéro de publication internationale: WO 2021/084190

(56) Documents cités:
- FR-A1- 2 160 528
- FR-A1- 3 018 705
- US-A- 6 136 590

## Description

### DOMAINE TECHNIQUE

La présente invention concerne le domaine du traitement des déchets, et en particulier le traitement des déchets issus d'une collecte d'ordures ménagères, en vue de leur recyclage, de leur valorisation ou de leur retraitement.

### TECHNIQUE ANTERIEURE

L'invention concerne plus précisément une installation de traitement d'un mélange primaire de déchets issus d'une collecte d'ordures ménagères et assimilées, une portion non négligeable de la masse du mélange primaire de déchets étant formée par des déchets biodégradables, ledit mélange primaire de déchets comprenant des déchets non biodégradables. Un exemple d'une telle installation est connu du document FR 3 018 705 A1.

L'invention concerne également un procédé de traitement d'un mélange primaire de déchets issus d'une collecte d'ordures ménagères et assimilées, une portion non négligeable de la masse du mélange primaire de déchets étant formée par des déchets biodégradables, ledit mélange primaire de déchets comprenant des déchets non biodégradables.

Le traitement industriel des ordures ménagères, après collecte de ces dernières, requiert un important travail de tri, de transformation et d'affinage des déchets formant ces ordures afin de permettre le recyclage, la valorisation ou encore le retraitement d'une part la plus conséquente possible de ces déchets. A défaut de moyens industriels permettant de traiter rapidement et efficacement les très grandes quantités de déchets ménagers produites quotidiennement, une quantité importante de déchets est généralement mise en décharge, enfouie ou incinérée, à travers le monde, alors qu'une grande partie de ces déchets pourrait faire l'objet d'un recyclage ou d'une valorisation, en particulier par compostage, méthanisation ou encore par transformation en combustible solide de récupération.

Pour faire face à cette problématique tant environnementale qu'économique, on connaît en particulier, dans le domaine du traitement industriel des ordures ménagères, des installations et procédés de traitement dit mécano-biologique (TMB). Ces installations et procédés mettent en oeuvre une combinaison d'opérations mécaniques de déchiquetage, de tri et de broyage, et d'opérations biologiques soit aérobies (compostage) soit anaérobies (méthanisation) afin de traiter au mieux les ordures ménagères, dont les déchets présentent généralement des caractéristiques très variées et disparates en termes de nature, de taille, de forme, de dimensions, de densité ou encore de texture.

Un avantage généralement constaté de tels installations et procédés de traitement mécano-biologique est leur capacité à traiter d'importants volumes de déchets et à permettre le captage d'une plus grande quantité de déchets biodégradables, valorisables biologiquement (composts et biogaz), que ne le permet habituellement une collecte sélective de ces derniers. Il n'en demeure pas moins, pour ces installations et procédés de traitement mécano-biologique, un fort enjeu d'amélioration continue des performances, en particulier en matière de capacité à traiter efficacement tout type de déchets (limitation du volume de déchets non traitables et du volume des refus générés, destinés à l'enfouissement ou l'incinération), et de rendement et de qualité de la production de composts et biogaz.

### EXPOSE DE L'INVENTION

Les objets assignés à la présente invention visent à répondre à cet enjeu et à proposer en conséquence une nouvelle installation et un nouveau procédé permettant de traiter rapidement, de manière particulièrement précise et efficace, de grands volumes de déchets ménagers, de sorte à permettre un recyclage et / ou une valorisation particulièrement qualitatifs d'une portion très importante du mélange de déchets, et en particulier la portion de déchets biodégradables que contient ce dernier.

Un autre objet de l'invention vise à proposer une nouvelle installation et un nouveau procédé de traitement d'un mélange de déchets permettant d'obtenir un compost de qualité particulièrement élevée.

Un autre objet de l'invention vise à proposer une nouvelle installation et un nouveau procédé de traitement d'un mélange de déchets permettant d'obtenir un biogaz avec très peu de, voire même aucun, déchets ultimes à enfouir ou incinérer.

Un autre objet de l'invention vise à proposer une nouvelle installation et un nouveau procédé de traitement d'un mélange de déchets qui sont faciles à mettre en oeuvre dans un contexte industriel, et en particulier dans le cadre d'un procédé industriel de traitement mécano-biologique d'ordures ménagères et assimilées.

Un autre objet de l'invention vise à proposer une nouvelle installation et un nouveau procédé de traitement d'un mélange de déchets permettant un traitement du mélange de déchets de façon majoritairement, voire totalement automatisée.

Un autre objet de l'invention vise à proposer une nouvelle installation et un nouveau procédé de traitement d'un mélange de déchets permettant de générer des produits dont la valeur est très supérieure à la valeur initiale du mélange de déchets.

Un autre objet de l'invention vise à proposer une nouvelle installation de conception simple et d'encombrement limité.

Les objets assignés à l'invention sont atteints à l'aide d'une installation de traitement d'un mélange primaire de déchets issus d'une collecte d'ordures ménagères et assimilées, une portion non négligeable de la masse dudit mélange primaire de déchets étant formée par des déchets biodégradables, ledit mélange primaire de déchets comprenant des déchets non biodégradables, ladite installation de traitement comprenant une unité de traitement d'un mélange secondaire de matériaux obtenu à partir dudit mélange primaire de déchets, une portion non négligeable de la masse dudit mélange secondaire de matériaux étant formée par des matériaux biodégradables, ladite unité de traitement comprenant un trommel rotatif pourvu d'une paroi de séparation pourvue d'une série d'orifices de séparation traversants permettant de séparer le mélange secondaire de matériaux en une première fraction de matériaux franchissant ladite paroi de séparation par l'intermédiaire de la série d'orifices de séparation et en une deuxième fraction résiduelle de matériaux, le mélange secondaire de matériaux étant destiné à circuler le long de ladite paroi de séparation pour être ainsi séparé, ladite unité de traitement comprenant également au moins une première et une deuxième tables densimétriques, et un moyen de séparation balistique positionné entre ledit trommel et lesdites tables densimétriques pour collecter ladite première fraction de matériaux et alimenter les première et deuxième tables densimétriques respectivement en au moins une première et une deuxième sous-fractions de matériaux, la première sous-fraction de matériaux étant formée de matériaux présentant une densité moyenne inférieure à une densité moyenne des matériaux formant la deuxième sous-fraction de matériaux.

Les objets assignés à l'invention sont également atteints à l'aide d'un procédé de traitement d'un mélange primaire de déchets issus d'une collecte d'ordures ménagères et assimilées, une portion non négligeable de la masse du mélange primaire de déchets étant formée par des déchets biodégradables, ledit mélange primaire de déchets comprenant des déchets non biodégradables, ledit procédé comprenant une étape E1 de traitement d'un mélange secondaire de matériaux obtenu à partir dudit mélange primaire de déchets, une portion non négligeable de la masse dudit mélange secondaire de matériaux étant formée par des matériaux biodégradables, ladite étape E1 de traitement comprenant successivement les opérations suivantes :
- une opération O1 au cours de laquelle on introduit ledit mélange secondaire de matériaux dans un trommel rotatif pourvu d'une paroi de séparation pourvue d'une série d'orifices de séparation traversants, et on sépare ledit mélange secondaire de matériaux en une première fraction de matériaux franchissant ladite paroi de séparation par l'intermédiaire de la série d'orifices de séparation et en une deuxième fraction résiduelle de matériaux, le mélange secondaire de matériaux circulant le long de ladite paroi de séparation pour être ainsi séparé,
- une opération 02 au cours de laquelle on sépare, à l'aide d'un moyen de séparation balistique, ladite première fraction de matériaux en au moins une première et une deuxième sous-fractions de matériaux, la première sous-fraction de matériaux étant formée de matériaux présentant une densité moyenne inférieure à la densité moyenne des matériaux formant la deuxième sous-fraction de matériaux, et
- une opération 03 au cours de laquelle on fait subir un tri densimétrique à chacune desdites première et deuxième sous-fractions de matériaux respectivement à l'aide d'au moins une première et d'une deuxième tables densimétriques, chacune alimentée par ledit moyen de séparation balistique.

### DESCRIPTION SOMMAIRE DES DESSINS

D'autres particularités et avantages de l'invention apparaîtront et ressortiront plus en détails à la lecture de la description faite ci-après, en référence aux dessins annexés, donnés uniquement à titre d'exemple(s) illustratif(s) et non limitatif(s), parmi lesquels :
- la figure 1 illustre, selon une vue partielle de dessus, un mode de réalisation de l'unité de traitement d'une installation de traitement conforme à l'invention, dans lequel mode de réalisation l'unité de traitement comprend deux tables densimétriques ;
- la figure 2 illustre, selon une vue schématique partielle en coupe, un mode de réalisation préférentiel d'une partie de l'une unité de traitement de l'installation conforme à l'invention ;
- la figure 3 illustre, de manière schématique, un procédé de traitement d'un mélange primaire de déchets issus d'une collecte d'ordures ménagères et assimilées conforme à l'invention.

### MANIERES DE REALISER L'INVENTION

Selon un premier aspect, l'invention concerne en tant que telle une installation de traitement d'un mélange primaire 2A de déchets, visant à trier, raffiner, valoriser et / ou recycler tout ou partie des déchets de ce dernier, et en particulier des déchets biodégradables, des déchets recyclables, et des déchets combustibles qu'il contient. L'invention concerne en outre, selon un deuxième aspect indépendant, un procédé de traitement d'un tel d'un mélange primaire 2A de déchets. Plus spécifiquement, il s'agit de déchets issus d'une collecte d'ordures ménagères et assimilées (OMA), c'est-à-dire de déchets issus de l'activité domestique quotidienne des ménages et de déchets « de routine » issus d'activités économiques (commerces, artisanat, etc.) et collectés dans les mêmes conditions que les déchets ménagers, typiquement sous la forme d'une collecte en porte-à-porte réalisée à l'aide de camions-poubelles.

De préférence, le mélange primaire 2A de déchets n'a subi aucun traitement et forme un mélange de déchets brut. En particulier, il n'a été effectué aucun broyage du mélange de déchets brut, ni aucun tri préalable visant à effectuer une ségrégation d'un type de déchet par rapport à un autre, et notamment à effectuer une séparation de déchets biodégradables et de déchets recyclables non biodégradables. De préférence, le mélange primaire 2A de déchets a été collecté auprès de ménages et / ou d'acteurs économiques sans que lesdits ménages et / ou acteurs économiques n'aient effectué un tri ou sélection préalable des déchets collectés. En particulier, la collecte du mélange primaire 2A de déchets n'a pas été sélective. Bien entendu, sans sortir du cadre de l'invention, le mélange primaire 2A de déchets pourra au contraire avoir été dépouillé d'une portion des déchets recyclables qu'il contient, par exemple par les ménages à l'occasion d'un pré-tri, ou avoir fait lui-même l'objet d'un pré-tri, par exemple par les ménages. Il s'agirait alors d'un mélange primaire 2A de déchets issus d'une collecte d'ordures ménagères dites résiduelles (OMR). Les déchets du mélange primaire 2A de déchets sont avantageusement collectés de façon brute et indifférenciée, mélangés dans des sacs, du genre sacs poubelle plastique fermés par les ménages. De manière avantageuse, préalablement à l'étape E1 (décrite ci-après), le procédé de traitement comprend une étape d'ouverture de sacs, du genre sacs poubelles plastique, dans lesquels sacs est contenu le mélange primaire 2A de déchets, afin de libérer ledit mélange primaire 2A de déchets desdits sacs pour effectuer l'étape E1. Cette étape d'ouverture des sacs est automatisée de sorte à n'impliquer aucun traitement manuel. Le mélange primaire 2A de déchets ainsi libéré des sacs est alors préférentiellement regroupé pour former le mélange primaire 2A de déchets concerné par l'installation et le procédé de traitement. L'ouverture des sacs de déchets peut être effectuée par exemple à l'aide d'un dispositif d'ouverture de sacs, que peut avantageusement comprendre l'installation de traitement, pour permettre la libération des déchets hors desdits sacs, de préférence sans abîmer ou altérer lesdits déchets.

Le mélange primaire 2A de déchets concerné par l'installation et le procédé de traitement selon l'invention comprend au moins des déchets biodégradables et des déchets non biodégradables, lesquels déchets biodégradables forment une portion non négligeable de la masse du mélange primaire 2A de déchets. De manière avantageuse, au moins 10 %, de préférence au moins 20 %, de la masse du mélange primaire 2A de déchets est formée par des déchets biodégradables. De manière plus avantageusement encore, au moins 50 %, de préférence au moins 60 %, de préférence au moins 70 %, de préférence encore au moins 80 % de la masse du mélange primaire 2A de déchets est formée par des déchets biodégradables. La teneur du mélange primaire 2A de déchets en déchets non biodégradables n'est pas particulièrement limitée. Typiquement, au moins 5 %, de préférence au moins 10 %, de préférence encore au moins 20 %, de la masse du mélange primaire 2A de déchets est formée par des déchets non biodégradables.

Au sens de l'invention, on entend par « déchet biodégradable » un déchet qui, sous l'action d'un milieu naturel, comprenant par exemple des organismes vivants et / ou de l'air et / ou de l'eau, peut naturellement et spontanément se décomposer en éléments divers susceptibles de dommages au milieu naturel (forte demande en oxygène, émission de lixiviats) à défaut d'avoir été stabilisés par exemple par compostage. Les organismes vivants peuvent en particulier être formés par des micro-organismes comme des bactéries, des champignons ou des algues, qui sont de nature à dégrader les déchets biodégradables à l'aide de réactions biologiques et / ou biochimiques. On entend de préférence par « déchets biodégradables » des déchets qui peuvent être biodégradés de cette manière à l'échelle temporelle d'une vie humaine, d'une décennie, ou plus préférentiellement d'une année ou de quelques mois, de façon préférée de quelques semaines. On entend de préférence par « déchets biodégradables » des déchets susceptibles d'entrer dans la fabrication et la formation de compost par compostage de ces derniers, et / ou dans la fabrication et la formation de biogaz par méthanisation de ces derniers. Les déchets « non biodégradables », au sens de l'invention, forment les autres déchets, qui ne subissent pas spontanément et naturellement une telle dégradation, ou qui la subissent de façon trop lente. Les déchets « non biodégradables », sont en particulier inadaptés pour entrer dans la formation de compost ou de biogaz. De tels déchets non biodégradables peuvent avantageusement comprendre des déchets recyclables ou au moins valorisables. Les « déchets recyclables » correspondent à des déchets qui peuvent être facilement transformés, par exemple chimiquement ou mécaniquement, pour former une matière première recyclée semblable à une matière première neuve, et qui peut à ce titre être à nouveau employée dans un cycle de fabrication de produits ou objets neufs. Typiquement, peuvent être considérés comme des « déchets recyclables » les déchets métalliques, formés par tout type de métaux, certains déchets plastiques, le verre, le papier et le carton, etc. Les « déchets valorisables » sont quant à eux des déchets qui, s'ils ne peuvent pas être facilement transformés en matière première recyclée, peuvent néanmoins trouver une utilité économique. Il s'agit typiquement de déchets qui présentent un fort pouvoir calorifique qui les rend susceptibles d'être transformés, valorisés, en combustibles solides de récupération (CSR), destinés à être ultérieurement brûlés dans des chaudières ou fours adaptés (par exemple dans des cimenteries). Les expressions « déchets recyclables » et « déchets valorisables » excluent de préférence les déchets biodégradables, même si la transformation de ces derniers en compost ou en biogaz leur confère en pratique un caractère valorisable. De tels déchets non biodégradables peuvent en outre comprendre des déchets ultimes inutilisables (déchets complexes, etc.), c'est-à-dire ni recyclables ni même valorisables, et typiquement destinés à l'enfouissement ou à l'incinération. De manière avantageuse, une portion non négligeable de la masse du mélange primaire 2A de déchets concerné par les installation et procédé conforme à l'invention est formée par des déchets recyclables (ou au moins valorisables) non biodégradables, par exemple 10 % de la masse du mélange primaire 2A de déchets.

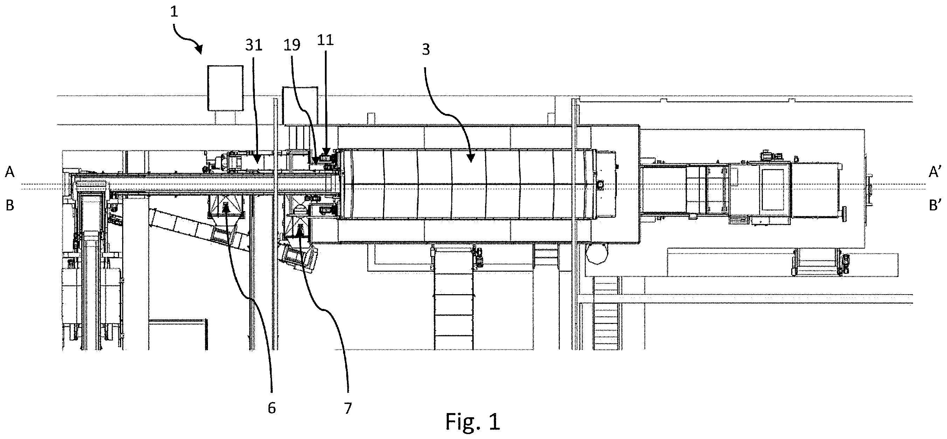

L'installation de traitement conforme à l'invention comprend une unité de traitement 1 d'un mélange secondaire 2B de matériaux obtenu à partir du mélange primaire 2A de déchets décrit ci-avant. Un mode de réalisation d'une telle unité de traitement 1 est illustré, selon une vue partielle de dessus, à la figure 1. L'unité de traitement 1 constitue avantageusement un sous-ensemble intégré à l'installation de traitement et qui est plus spécifiquement dédié au traitement d'un mélange secondaire 2B de matériaux qui a été produit par l'installation de traitement, en amont de l'unité de traitement 1, à partir du mélange primaire 2A de déchets décrit ci-avant. A ce titre, les matériaux formant le mélange secondaire 2B de matériaux peuvent être constitués par des déchets tels qu'initialement présents au sein du mélange primaire 2A de déchets (c'est-à-dire non transformés ou biodégradés) et / ou par des matériaux issus d'une transformation ou d'une dégradation au moins partielle de déchets inclus dans le mélange primaire 2A de déchets. Quoiqu'il en soit, une portion non négligeable de la masse dudit mélange secondaire 2B de matériaux est formée par des matériaux biodégradables, selon la définition du terme « biodégradable » introduite ci-avant. En particulier, lesdits matériaux biodégradables sont typiquement formés par de la matière organique, c'est-à-dire de la matière issue d'êtres vivants (matière végétale, animale, etc.), et dans une moindre mesure, par de la matière issue d'une transformation par l'homme et présentant un caractère biodégradable (par exemple, des débris de papier humide ou de sacs en matière plastique d'origine végétale), au sens de ce qui précède. En ce sens, ladite unité de traitement 1 constitue donc avantageusement une unité de post-traitement ou d'affinage de matériaux issus d'un premier traitement par l'installation de traitement, et plus spécifiquement, une unité de post-traitement ou d'affinage d'un mélange riche en matériaux biodégradables. Préférentiellement, les matériaux biodégradables en question forment au moins 40 %, de préférence au moins 45 %, de préférence au moins 50 %, de préférence au moins 60 %, de préférence au moins 70 %, de préférence encore au moins 80 % de la masse du mélange secondaire 2B de matériaux mis en oeuvre par l'unité de traitement. Outre lesdits matériaux biodégradables, le mélange secondaire 2B de matériaux comprend avantageusement des matériaux non biodégradables (selon la définition du terme « biodégradable » également introduite ci-avant), issus eux aussi dudit mélange primaire 2A de déchets.

Conformément à l'invention, l'unité de traitement 1 comprend un trommel 3, ou crible à tambour, qui est monté rotatif autour de son axe longitudinal. Le trommel 3 rotatif est pourvu d'une paroi 4 de séparation, qui s'étend selon un axe A-A' d'extension longitudinale autour duquel ladite paroi 4 de séparation est montée à rotation. La paroi 4 de séparation est pourvue d'une série d'orifices de séparation traversants (non illustré) permettant de séparer le mélange secondaire 2B de matériaux, d'une part, en une première fraction 5 de matériaux franchissant ladite paroi 4 de séparation par l'intermédiaire de la série d'orifices de séparation et, d'autre part, en une deuxième fraction résiduelle de matériaux (qui ne franchit donc pas la paroi 4 de séparation par l'intermédiaire de la série d'orifices de séparation), le mélange secondaire 2B de matériaux étant destiné à circuler le long de ladite paroi 4 de séparation pour être ainsi séparé. De façon préférentielle, la paroi 4 de séparation présente une forme générale de cylindre à section circulaire, dont la hauteur forme l'axe A-A' d'extension longitudinale de la paroi 4 de séparation, autour duquel axe A-A' la paroi 4 de séparation peut être mise en rotation. Alternativement, ladite paroi 4 de séparation pourrait présenter une forme générale de prisme ou de tronc de cône, dont la hauteur serait formée par l'axe A-A'. Avantageusement, l'axe A-A' d'extension longitudinale et de rotation de la paroi 4 de séparation est légèrement incliné par rapport à l'horizontale, de sorte à favoriser la circulation du mélange secondaire 2B de matériaux le long de la paroi 4 de séparation, sous l'effet de la gravité notamment, depuis une entrée d'admission du trommel 3, au niveau de laquelle le mélange secondaire 2B de matériaux est destiné à être introduit à l'intérieur du trommel 3, vers une sortie d'évacuation du trommel 3, au niveau de laquelle deuxième fraction résiduelle de matériaux est destinée à être évacuée hors du trommel 3.

Au contact de la paroi 4 de séparation, le mélange secondaire 2B de matériaux est ainsi criblé, tamisé, la première fraction 5 de matériaux qui traverse la paroi 4 de séparation par l'intermédiaire des orifices de séparation étant ainsi formée par des matériaux dont la taille est inférieure, en moyenne, à la taille des matériaux formant la deuxième fraction résiduelle de matériaux. Avantageusement, la série d'orifices de séparation est répartie sur toute la circonférence et sur toute la longueur (selon l'axe A-A') de la paroi 4 de séparation, de sorte que la séparation du mélange secondaire 2B de matériaux se déroule en continu lorsque la paroi 4 de séparation est en rotation selon l'axe A-A'.

On entend par « taille », de manière générale, une dimension de l'espace du matériau selon sa longueur la plus grande, ou une dimension caractéristique. On entend par « taille » d'un matériau, une dimension géométrique caractéristique du matériau individuel, qui lui permet par exemple de passer au travers d'un orifice de taille correspondante si la taille du matériau est inférieure à la taille de l'orifice, ou au contraire de ne pas passer si la taille dudit matériau est supérieure à la taille dudit orifice. On entend par « deuxième fraction résiduelle de matériaux », la fraction restante de matériaux du mélange secondaire 2B de matériaux, qui n'a pas correspondu aux caractères de séparation de la première fraction 5 de matériaux, en l'espèce le critère de taille. Rien n'interdit cependant que, au sens de l'invention, que des matériaux qui auraient pu satisfaire au critère de séparation, en l'espèce de taille, de la première fraction 5 de matériaux puissent être également présent dans la deuxième fraction de matériaux.

Outre ledit trommel 3, qui est donc destiné à soumettre le mélange secondaire 2B de matériaux à un tri essentiellement dimensionnel, l'unité de traitement 1 comprend également au moins une première et une deuxième tables densimétriques 6, 7, et un moyen de séparation balistique 8 positionné entre ledit trommel 3 et lesdites tables densimétriques 6, 7 pour collecter ladite première fraction 5 de matériaux et alimenter les première et deuxième tables densimétriques 6, 7 respectivement en au moins une première et une deuxième sous-fractions 9, 10 de matériaux, la première sous-fraction 9 de matériaux étant formée de matériaux présentant une densité moyenne inférieure à une densité moyenne des matériaux formant la deuxième sous-fraction 10 de matériaux.

L'installation de traitement conforme à invention met ainsi en oeuvre une combinaison d'un moyen de tri dimensionnel, à savoir le trommel 3, et un moyen de tri densimétrique, à savoir les tables densimétriques 6, 7. Au lieu de recourir à une seule et unique table densimétrique, qui serait destinée à être alimentée directement en ladite première fraction 5 de matériaux (dont les matériaux peuvent présenter une grande disparité de densité moyenne propre malgré le tri dimensionnel assuré par le trommel 3), et dont les capacités maximales de traitement optimal seraient rapidement atteintes, voire dépassées, par celles du trommel 3 (sauf à surdimensionner de manière coûteuse la table densimétrique ou à restreindre le débit du trommel 3), l'installation de traitement conforme à l'invention met en oeuvre au moins deux tables densimétriques 6, 7 distinctes, avantageusement agencées en parallèle vis-à-vis du flux de matériaux à traiter, chacune d'entre elles étant alimentée par une sous-fraction 9, 10 particulière de la première fraction 5 de matériaux triée par le trommel 3. Dès lors, le flux de matériaux triés sortants du trommel 3 par la paroi 4 de séparation de ce dernier peut être facilement géré, même à des débits très élevés, en répartissant la charge sur les deux (ou plus) tables densimétriques 6, 7. L'invention repose en outre sur le constat que les performances d'une table densimétrique, en termes à la fois de débit et de précision de tri, peuvent être optimisées non seulement en pratiquant un tri dimensionnel en amont de la table densimétrique de manière à réduire la disparité dimensionnelle des matériaux soumis à la table densimétrique, et en contrôlant le débit de matériaux entrants dans la table densimétrique, mais également en alimentant la table densimétrique en matériaux dont la disparité de densité a été contrôlée, limitée, en amont de la table densimétrique. L'invention repose par ailleurs sur l'idée qu'un tel pré-tri densimétrique de la première fraction 5 de matériaux issue du trommel 3 peut être réalisé, de manière simple et efficace, à l'aide d'un moyen de séparation balistique 8, c'est-à-dire à l'aide d'un dispositif conçu pour permettre une séparation de ladite première fraction 5 de matériaux suivant un critère densimétrique, selon les caractéristiques d'une trajectoire décrite par chacun des matériaux formant la première fraction 5 de matériaux. En effet, comme cela est par ailleurs connu en tant que tel, la densité d'un matériau en mouvement influe sur la trajectoire que suit par ce dernier lorsqu'il est projeté. Ainsi, l'installation de traitement conforme à l'invention permet avantageusement de trier rapidement, de manière particulièrement précise et efficace, de grands volumes de déchets ménagers, ce qui autorise in fine un recyclage et / ou une valorisation particulièrement qualitatifs d'une portion très importante du mélange primaire 2A de déchets, et en particulier du mélange secondaire 2B de matériaux issus de ce dernier.

Compte tenu de la configuration particulière de l'unité de traitement 1 de l'installation, qui vient d'être exposée, il n'est avantageusement pas nécessaire de recourir à des tables densimétriques complexes et coûteuses, telles que par exemple des tables densimétriques ternaires, des tables densimétriques binaires classiques pouvant avantageusement être employées, c'est-à-dire des tables densimétriques conçues pour séparer un flux de matériaux entrants en deux flux de matériaux sortants sur la base d'une seule valeur de densité seuil moyenne. La conception, le paramétrage et le pilotage de l'installation s'en trouve ainsi avantageusement facilités, et son fonctionnement fiabilisé. Les tables densimétriques 6, 7 peuvent être éventuellement de caractéristiques différentes l'une de l'autre (en termes notamment de capacité de traitement, et / ou de puissance, et / ou de plages de fonctionnement en termes de densité et / ou de dimensions de matériaux entrants, etc.). Cependant, il s'agit avantageusement de tables densimétriques 6, 7 identiques, mais dont certains paramètres de fonctionnement peuvent être réglés différemment.

Bien évidemment, l'invention n'est pas limitée à la mise en oeuvre de deux tables densimétriques 6, 7 uniquement et d'un moyen de séparation balistique 8 conçu pour séparer la première fraction 5 de matériaux en seulement deux sous-fractions 9, 10 de matériaux de densités moyennes différentes. En effet, l'unité de traitement 1 de l'installation peut comprendre davantage de tables densimétriques en aval du trommel 3, par exemple 3 ou 4 (voire plus), le moyen de séparation balistique 8 étant alors conçu, adapté, de sorte à séparer la première fraction 5 de matériaux issue du trommel 3 en autant de sous-fractions de matériaux que de tables densimétriques.

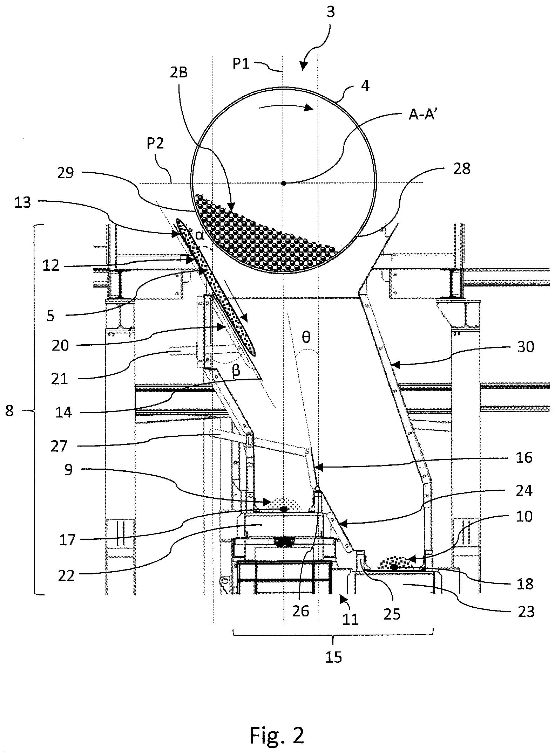

Selon un mode de réalisation préférentiel, illustré à la figure 2, l'unité de traitement 1 comprend un moyen de convoyage 11, qui est positionné à une altitude inférieure à une altitude respective du trommel 3, le trommel 3 et sa paroi 4 de séparation étant donc positionnés plus haut que le moyen de convoyage 11. Le moyen de séparation balistique 8 comprend avantageusement une rampe 12 (ou couloir ou tapis ou encore glissière) de chute inclinée qui comprend, au niveau d'une extrémité amont (ou extrémité supérieure), une portion de rampe, dite portion de collecte 13, qui est positionnée en regard de la paroi 4 de séparation du trommel 3 pour collecter la première fraction 5 de matériaux traversant cette dernière. Ladite rampe 12 de chute présente en outre une extrémité aval 14 (ou extrémité inférieure), opposée à ladite extrémité amont, et qui est quant à elle positionnée au-dessus, et à distance, d'une portion d'alimentation 15 du moyen de convoyage 11. L'extrémité aval 14 de la rampe 12 de chute est donc ainsi positionnée à une altitude qui est inférieure à l'altitude du trommel 3 et de la paroi 4 de séparation de ce dernier, et qui est supérieure à l'altitude respective de la portion d'alimentation 15 du moyen de convoyage 11. Avantageusement, la portion de collecte 13 de la rampe 12 de chute est inclinée par rapport à la verticale d'un angle α compris entre 15° et 70°, de préférence compris entre 20° et 60°, et de préférence encore sensiblement égale à 30°.

Le moyen de séparation balistique 8 comprend également au moins un volet (ou panneau) de répartition balistique 16 qui définit, sur une surface de convoyage dudit moyen de convoyage 11, au moins une première zone de convoyage 17 de ladite première sous-fraction 9 de matériaux et une deuxième zone de convoyage 18 de ladite deuxième sous-fraction 10 de matériaux. Ledit moyen de convoyage 11 comprend avantageusement une portion d'évacuation 19, distante de ladite portion d'alimentation 15, et par l'intermédiaire de laquelle les première et deuxième zones 17, 18 de convoyage sont aptes à alimenter chacune respectivement l'une desdites tables densimétriques 6, 7.

Ainsi, la première fraction 5 de matériaux, qui traverse la paroi 4 de séparation du trommel 3 est collectée, récupérée, par la portion de collecte 13 de la rampe 12 de chute inclinée, laquelle guide ensuite la chute de ladite première fraction 5 de matériaux en direction de la portion d'alimentation 15 du moyen de convoyage 11 positionné à une altitude inférieure à celle du trommel 3. Glissant le long de la rampe 12 de chute sous l'effet de la gravité, la première fraction 5 de matériaux est projetée en l'air en direction de la portion d'alimentation 15 du moyen de convoyage 11 à partir de l'extrémité aval 14 de la rampe 12 de chute, selon une répartition et une trajectoire spatiale des matériaux de ladite première fraction 5 de matériau qui est dépendante de la densité respective desdits matériaux. Positionné au-dessus de, ou sur le, moyen de convoyage 11, le volet de répartition balistique 16 est destiné à intercepter au moins une partie du flux de ladite première fraction 5 de matériaux chutant par l'intermédiaire de la rampe 12, selon la trajectoire de chute des matériaux formant cette dernière. Ainsi, les matériaux de faible densité formant la première sous-fraction 9 de matériaux chutent sur une partie de la surface de convoyage du moyen de convoyage 11 située devant le volet de répartition balistique 16 ou sont interceptés par ce dernier et retombent devant le volet de répartition balistique 16 (première zone de convoyage 17). Les matériaux de plus forte densité formant la deuxième sous-fraction 10 de matériaux suivent quant à eux une trajectoire passant au-dessus du volet de répartition balistique 16 et retombent sur une partie de la surface de convoyage du moyen de convoyage 11 située derrière le volet de répartition balistique 16 (deuxième zone de convoyage 18). Le moyen de convoyage 11 peut alors transporter les première et deuxième sous-fractions 9, 10 de matériaux ainsi séparées, pour alimenter respectivement les premières et deuxième tables densimétriques 6, 7.

Un tel moyen de séparation balistique 8 permet ainsi de séparer de manière particulièrement simple et rapide, et à l'aide de moyens techniques relativement peu coûteux et peu encombrants, la première fraction 5 de matériaux en au moins une première et une deuxième sous-fractions 9, 10 de matériaux, les matériaux formant la première sous-fraction 9 de matériaux présentant en moyenne une densité inférieure à celle que présentent respectivement en moyenne les matériaux formant la deuxième sous-fraction 10 de matériaux. Bien évidemment, l'unité de traitement 1 pourra comprendre une pluralité de volets de répartition balistique, typiquement positionnés en parallèle les uns derrière les autres, de manière à séparer la première fraction 5 de matériaux en un nombre de sous-fractions de matériaux supérieur à deux, et à définir sur la surface de convoyage du moyen de convoyage 11 un nombre de zones de convoyage correspondant, pour convoyer respectivement chacune des sous-fractions de matériaux ainsi séparée vers une table densimétrique distincte.

Avantageusement, l'extrémité aval 14 de la rampe 12 de chute est positionnée au-dessus et en regard de la surface de convoyage du moyen de convoyage 11, et de manière plus préférentielle encore au-dessus et en regard de la première zone 17 de convoyage définie par le volet de répartition balistique 16. De la sorte, les matériaux les moins denses, qui suivent une trajectoire de chute la plus courte à partir de l'extrémité aval 14 de la rampe 12 de chute, peuvent tomber directement sur la première zone 17 de convoyage définie sur le moyen de convoyage 11.

Ladite rampe 12 de chute comprend de préférence également une portion de rampe, dite portion accélératrice 20, qui prolonge ladite portion de collecte 13 jusqu'à l'extrémité aval 14 de la rampe 12 de chute, et dont l'inclinaison moyenne est réglable par rapport à la verticale (représentée en ligne pointillé sur la figure 2), pour contrôler ainsi la vitesse de chute de ladite première fraction 5 de matériaux, le long la rampe 12 de chute, en direction de la portion d'alimentation 15 du moyen de convoyage 11. Ainsi, selon l'inclinaison de la portion accélératrice 20 de la rampe 12 de chute, la première fraction 5 de matériaux peut voir sa vitesse de chute plus ou moins accélérée, voire au contraire ralentie si nécessaire, en direction de la portion d'alimentation 15 du moyen de convoyage 11. Un tel réglage de l'inclinaison de la portion accélératrice 20 de la rampe 12 de chute, et donc de la vitesse de chute de la première fraction 5 de matériaux, permet avantageusement d'affiner la précision de la séparation balistique sur critère densimétrique réalisée à l'aide de la rampe 12 de chute et du volet de répartition balistique 16, notamment selon la nature et la composition de la première fraction 5 de matériau. Par exemple, dans le mode de réalisation illustré à la figure 2, la portion accélératrice 20 de la rampe 12 de chute est montée à pivotement au niveau d'un bord inférieur de la portion de collecte 13 de la rampe 12 de chute, de manière à ce que ce que son inclinaison puisse être réglée d'un angle β plus ou moins important par rapport à la verticale, par exemple par l'intermédiaire d'au moins une première manette 21 de réglage, actionnable manuellement ou de manière automatisée. De préférence, la valeur dudit angle β est comprise entre comprise entre 15° et 70°, de préférence entre 30° et 60°, et de préférence encore entre 35° et 55°. Il est à noter que la portion accélératrice 20 peut bien évidemment, tout comme la portion de collecte 13, collecter une partie de la première fraction 5 de matériau triée par le trommel 3.

De manière avantageuse, le moyen de convoyage 11 est un moyen de convoyage à bande(s), laquelle ou lesquelles bandes forment ainsi la surface de convoyage du moyen de convoyage 11. Ceci étant, d'autres types de moyens de convoyage pourraient être envisagés, étant entendu qu'un moyen de convoyage à bande(s) est particulièrement bien adapté au transport d'un mélange de matériaux contenant des matériaux biodégradables. Le moyen de convoyage 11 comprend plus spécifiquement au moins un convoyeur, et donc avantageusement au moins un convoyeur à bande (ou bande(s) transporteuse(s)). De préférence, ledit convoyeur s'étend longitudinalement selon une direction B-B' de convoyage sensiblement parallèle à l'axe A-A' d'extension longitudinale de la paroi 4 de séparation, de manière notamment à simplifier la conception de l'unité de traitement 1 et de facilité son intégration et son agencement au sein de l'installation de traitement. Avantageusement, le volet de répartition balistique 16 s'étend quant à lui longitudinalement selon une direction sensiblement parallèle à ladite direction B-B' de convoyage. L'extrémité aval 14 de la rampe 12 de chute est délimitée par un bord aval qui s'étend avantageusement selon une direction sensiblement parallèle à la direction B-B' de convoyage, de sorte que la distance de projection de la première fraction 5 de matériaux depuis le bord aval de la rampe 12 de chute jusqu'au volet de réparation balistique 16 est constante selon la longueur dudit bord aval.

Selon une première variante, le moyen de convoyage 11 peut comprendre un unique convoyeur à bande (mono-bande), lesdites première et deuxième zones de convoyage étant donc définies sur une même bande de convoyage, de part et d'autre du volet de répartition balistique 16. Ce dernier est alors préférentiellement positionné longitudinalement selon la direction B-B' de convoyage dudit convoyeur à bande, par exemple de manière à définir sur la bande du convoyeur des première et deuxième zones de convoyage de largeurs sensiblement identiques. Avantageusement, le convoyeur à bande unique est positionné relativement au trommel 3 de telle manière que ladite direction B-B' moyenne de convoyage est sensiblement parallèle à l'axe A-A' d'extension longitudinale de la paroi 4 de séparation du trommel 3. Selon une autre variante, retenue dans l'exemple illustré à la figure 2, le moyen de convoyage 11 comprend un premier et un deuxième convoyeurs 22, 23 à bande, distincts l'un de l'autre. Le volet de répartition balistique 16 est alors positionné entre les bandes respectives desdits convoyeurs 22, 23 à bande, de sorte à définir ladite première 17 zone de convoyage sur la bande du premier convoyeur 22 et ladite deuxième zone 18 de convoyage sur la bande du deuxième convoyeur 23. Un tel moyen de convoyage 11 comprenant une pluralité de convoyeurs 22, 23 à bande permet avantageusement de convoyer lesdites première et deuxième sous-fractions 9, 10 de matériaux à des vitesses différentes et / ou dans des directions ou des sens de convoyage différents. En particulier, il est ainsi possible de régler la vitesse / le débit d'alimentation de chacune des première et deuxième tables densimétriques 6, 7 de manière indépendante. Avantageusement, les premier et deuxième convoyeurs 22, 23 du moyen de convoyage 11 s'étendent parallèlement l'un à l'autre selon la même direction B-B' moyenne de convoyage, et sont positionnés relativement au trommel 3 de telle manière que ladite direction B-B' moyenne de convoyage est sensiblement parallèle à l'axe A-A' d'extension longitudinale de la paroi 4 de séparation du trommel 3. Tel que cela est illustré dans l'exemple de la figure 2, lesdits premier et deuxième convoyeurs 22, 23 à bande peuvent être avantageusement agencés l'un en dessous de l'autre en escalier, de préférence selon une altitude allant décroissant selon la trajectoire moyenne de la première fraction 5 de matériaux chutant par l'intermédiaire de la rampe 12. Une telle configuration spatiale contribue à la compacité de l'unité de traitement 1 et à la précision de la séparation densimétrique, puisqu'elle permet de rapprocher au maximum les bandes respectives des convoyeurs 22, 23 malgré l'encombrement externe de ces derniers.

Eventuellement, dans le cas où les bandes des premier et deuxième convoyeurs 22, 23 à bandes ne sont pas contigües ou ne se recouvrent pas spatialement, de sorte qu'il existe un espace interstitiel entre lesdites bandes, l'unité de traitement 1 peut avantageusement comprendre une ou plusieurs plaques de transition 24 configurées pour occulter tout ou partie dudit espace interstitiel et éviter ainsi que des matériaux issus la première fraction 5 de matériaux ne tombent dans ledit espace interstitiel. Ainsi, dans l'exemple illustré à la figure 2, le volet de répartition balistique 16 étant monté sur un flanc 25 du premier convoyeur 22, l'unité de traitement 1 comprend une plaque de transition 16 qui relie ledit flanc 25 du premier convoyeur 22 à un flanc 26 adjacent du deuxième convoyeur 23, de sorte à occulter l'espace interstitiel formé ici formé entre lesdits flancs 25, 26. Puisque, dans cet exemple, les premier et deuxième convoyeurs 22, 23 à bande sont agencés l'un en dessous de l'autre en escalier, ladite plaque de transition 24 est avantageusement inclinée en direction de la bande du deuxième convoyeur 23, de sorte à guider, si nécessaire, des matériaux formant la deuxième sous-fraction 10 de matériaux vers la bande du deuxième convoyeur 23 (deuxième zone de convoyage 18).

Par ailleurs, afin de limiter encore l'encombrement de l'unité de traitement 1, la portion d'alimentation 15 du moyen de convoyage 11 (et en particulier desdits premier et deuxième convoyeurs 22, 23), est avantageusement positionnée en-dessous de, et plus avantageusement encore au moins partiellement en regard de, la paroi 4 de séparation du trommel 3.

De manière avantageuse, le volet de répartition balistique 16 est monté mobile relativement à la surface de convoyage du moyen de convoyage 11, de manière à permettre le réglage de la position et / ou l'orientation du volet de répartition balistique 16 par rapport au flux de ladite première fraction 5 de matériaux chutant par l'intermédiaire de la rampe 12, et d'intercepter une part plus ou moins importante de ladite première fraction 5 de matériaux. Ainsi, le réglage de la position et / ou de l'inclinaison du volet de répartition balistique 16 permet avantageusement de définir une densité moyenne seuil de matériaux sur la base de laquelle le volet de répartition balistique 16 répartit les matériaux formant ladite première fraction 5 de matériaux soit sur la première zone de convoyage 17, soit sur la deuxième zone de convoyage 18. Ce faisant, le réglage de la position et / ou l'orientation du volet de répartition balistique 16 permet également avantageusement de moduler la masse respective des première et deuxième sous-fractions 9, 10 de matériaux ainsi séparées et destinées à être convoyées respectivement vers les première et deuxième tables densimétriques 6, 7. Par exemple, dans le mode de réalisation illustré à la figure 2, le volet de répartition balistique 16 est monté à pivotement, par l'intermédiaire d'un bord inférieur, par rapport à la surface de convoyage définie par les bandes respectives des premier et deuxième convoyeurs 22, 23, de manière à ce que ce que son inclinaison puisse être réglée d'un angle θ plus ou moins élevé par rapport à la verticale (représentée selon un trait en pointillés), par exemple par l'intermédiaire d'au moins une deuxième manette 27 de réglage, actionnable manuellement ou de manière automatisée.

De préférence, la paroi 4 de séparation du trommel 3 s'étendant, comme évoqué ci-avant, selon l'axe A-A' d'extension longitudinale autour duquel ladite paroi 4 de séparation est montée à rotation, la rampe 12 de chute s'étend longitudinalement suivant ledit axe A-A' d'extension longitudinale de la paroi 4 de séparation. En d'autres termes, la rampe 12 de chute s'étend le long et en regard de la paroi 4 de séparation, selon une direction moyenne sensiblement parallèle à l'axe A-A' d'extension longitudinale de la paroi 4 de séparation. A ce titre, la portion de collecte 13 de la rampe 12 de chute peut avantageusement constituer (ou être confondue avec) une joue du trommel 3. De manière plus préférentielle encore, la rampe 12 de chute (et en particulier la portion de collecte 13 de cette dernière), s'étend selon une longueur sensiblement identique à la longueur de la paroi 4 de séparation, de manière à collecter et guider les matériaux formant la première fraction 5 de matériaux suivant toute la longueur de séparation du mélange secondaire 2B de matériaux le long de l'axe A-A' d'extension longitudinale de la paroi 4 de séparation.

Lorsque la paroi 4 de séparation du trommel 3 est mise en rotation autour de son axe A-A' d'extension longitudinale et de rotation, à partir une certaine vitesse angulaire, les matériaux formant le mélange secondaire 2B de matériaux ont tendance à se regrouper, à s'entasser, dans une portion inférieure de la paroi 4 de séparation en remontant cette dernière dans le sens de la rotation. Comme illustré à la figure 2, la paroi 4 de séparation du trommel 3 présente un premier plan P1 vertical et un deuxième plan P2 orthogonal audit un premier plan P1, lesdits premier et deuxième plans P1, P2 contenant l'axe A-A' d'extension longitudinale de la paroi 4 de séparation. Lesdits premier et deuxième plans P1, P2 définissent, en-dessous du deuxième plan P2, un premier et deuxième secteurs angulaires 28, 29 consécutifs, le deuxième secteur angulaire 29 étant situé à l'aval du premier secteur angulaire 28 dans le sens de rotation de la paroi 4 de séparation (indiqué par une flèche sur la figure 2). Ainsi, lorsque la paroi 4 de séparation du trommel 3 est mise en rotation autour de l'axe A-A', le mélange secondaire 2B de matériaux qui circule à l'intérieur du trommel 3 le long de la paroi 4 de séparation de ce dernier, a donc globalement tendance à venir se positionner au niveau dudit deuxième secteur angulaire 29, c'est-à-dire que, si le mélange secondaire 2B de matériaux occupe les premier et deuxième secteurs 28, 29 angulaires, plus de la moitié de son volume et de sa masse vient cependant se positionner au niveau dudit deuxième secteur 29 angulaire. En outre, les matériaux formant la première fraction 5 de matériaux qui traversent ladite paroi 4 de séparation (et particulier les matériaux présentant les plus fortes densités) subissent une accélération centrifuge, due à la rotation du trommel 3, qui tend à leur conférer une trajectoire de chute non strictement verticale mais au contraire orientée en oblique selon le sens de rotation de la paroi 4 de séparation. Afin de collecter au mieux ladite première fraction 5 de matériaux en tenant compte de ces phénomènes, la rampe 12 de chute (et en particulier la portion de collecte 13 de cette dernière) est avantageusement positionnée en regard dudit deuxième secteur angulaire 29.

Par ailleurs, il a été observé que les matériaux du mélange secondaire 2B de matériaux de plus faible densité ont globalement tendance à être moins soumis aux phénomènes décrits ci-dessus que les matériaux de plus forte densité. De ce fait, ces matériaux de faible densité sont davantage susceptibles de traverser la paroi 4 de séparation selon une trajectoire moyenne de direction verticale passant par l'axe A-A'. C'est pourquoi, il est avantageux, comme illustré dans l'exemple de la figure 2, que la paroi 4 de séparation et la portion d'alimentation 15 du moyen de convoyage 11 soient positionnés l'un par rapport à l'autre de telle manière que l'axe A-A' d'extension longitudinale de la paroi 4 de séparation est positionné au-dessus et en regard de la première zone de convoyage 17, au niveau de laquelle est répartie la première sous-fraction 9 de matériaux qui est formée des matériaux présentant les densités moyennes les plus faibles, comme expliqué précédemment.

A mesure que le mélange secondaire 2B de matériaux progresse le long de la paroi 4 de séparation du trommel 3 pour être séparé, la quantité et la masse de matériaux traversant ladite paroi 4 de séparation tend à décroître. De ce fait, les caractéristiques de la chute des matériaux de la première fraction 5 de matériaux le long de la rampe 12 de chute peuvent donc varier suivant l'axe A-A', ce qui peut avoir un impact sur la qualité du tri densimétrique opéré par la rampe 12 de chute et le volet de répartition balistique 16. Aussi, afin d'améliorer encore la fiabilité et la précision du tri balistique de la première fraction 5 de matériaux en tout point suivant l'axe A-A', la portion accélératrice 20 de la rampe 12 de chute présente préférentiellement une inclinaison moyenne par rapport à la verticale qui varie suivant ledit axe A-A' d'extension longitudinale de la paroi 4 de séparation. Plus précisément, la rampe 12 de chute présente une inclinaison décroissante par rapport à la verticale, c'est-à-dire une pente de plus en plus forte dans le sens de circulation du mélange secondaire 2B de matériaux le long de la paroi 4 de séparation du trommel 3. En pratique, une telle inclinaison variable peut être obtenue de différentes manières. Par exemple, la portion accélératrice 20 de la rampe 12 de chute peut être formée d'une pluralité de plaques rigides, distinctes et aboutées l'une à l'autre suivant l'axe A-A' d'extension longitudinale de la paroi 4 de séparation, l'inclinaison respective desdites plaques étant réglée de manière dégressive suivant l'axe A-A' et dans le sens de circulation du mélange secondaire 2B de matériaux le long de la paroi 4 de séparation du trommel 3. Ainsi chaque plaque offre une pente d'accélération plus forte que la plaque qui la précède dans le sens de circulation du mélange secondaire 2B de matériaux le long de la paroi 4 de séparation du trommel 3. Alternativement, la portion accélératrice 20 de la rampe 12 de chute peut être formée d'une seule et unique plaque qui présente sur sa longueur un profil vrillé. Il peut alors s'agir soit d'une plaque rigide à laquelle a été définitivement conféré un tel profil vrillé, soit d'une plaque suffisamment souple pour pouvoir être vrillée en réglant son inclinaison de manière plus marquée en l'une de ses extrémités qu'à l'autre de ses extrémités.

De manière avantageuse, l'unité de traitement 1 comprend, comme cela est illustré à la figure 1, une trémie 30 (ou carter) qui est positionnée en-dessous du trommel 3, en regard d'une part de la paroi 4 de séparation de ce dernier et d'autre part de la portion d'alimentation 15 du moyen de convoyage 11. Reliant ainsi le trommel 3 de la portion d'alimentation 15 du moyen de convoyage 11, de manière avantageusement étanche, ladite trémie 30 empêche la dispersion au sol de matériaux de ladite première fraction 5 de matériaux. Les matériaux de ladite première fraction 5 de matériaux qui n'auraient éventuellement pas été collectés par la rampe 12 de chute ou qui auraient été projetés par cette dernière hors de la zone de convoyage du moyen de convoyage 11, peuvent ainsi être avantageusement guidés par les parois de la trémie 30 vers la surface de convoyage du moyen de convoyage 11. Des amortisseurs en élastomère (non illustré) peuvent en outre être avantageusement prévus, en particulier au niveau de la portion d'alimentation 15 du moyen de convoyage 11, de manière à limiter le risque de rebond (et donc de dispersion) des matériaux formants lesdites première et deuxième sous-fractions 9, 10 de matériaux sur la surface de convoyage du moyen de convoyage 11.

Eventuellement, afin de faciliter la disposition des tables densimétriques 6, 7, l'unité de traitement 1 peut comprendre en outre deux autres convoyeurs 31, à bande de préférence, dont une extrémité respective est positionnée en dessous et en regard de la portion d'évacuation 19 du moyen de convoyage 11 pour amener respectivement la première sous-fraction 9 de matériaux jusqu'à la première table densimétrique 6, et la deuxième sous-fraction 10 de matériaux jusqu'à la deuxième table densimétrique 7, et ce selon des directions et / ou des sens de convoyage différents.

Bien évidemment, l'invention n'est pas limitée au mode de réalisation préférentiel du moyen de séparation balistique 8 décrit ci-dessus. Bien qu'étant de conception particulièrement simple et peu onéreuse et de mise en oeuvre particulièrement efficace, ce dernier pourrait éventuellement être remplacé par tout autre moyen de séparation balistique connu permettant une telle séparation densimétrique de ladite première fraction 5 de matériaux.

De manière préférentielle, l'installation de traitement comprend, en amont de ladite unité de traitement 1, au moins une unité de dégradation biologique (non illustrée) permettant de faire subir un processus de dégradation biologique à au moins une partie des déchets biodégradables contenus dans le mélange primaire 2A de déchets, de manière à biodégrader au moins en partie lesdits déchets biodégradables et à former (en moins en partie) ainsi ledit mélange secondaire 2B de matériaux. Les matériaux biodégradables, contenus dans la portion non négligeable de la masse du mélange secondaire 2B de matériaux qui est formée de matériaux biodégradables, sont donc avantageusement dans ce cas des matériaux biodégradables au moins partiellement biodégradés, et de préférence seulement partiellement biodégradés. L'unité de dégradation biologique vise avantageusement à faire subir un processus forcé, accéléré, de dégradation biologique.

L'installation de traitement peut ainsi avantageusement comprendre, en amont de ladite unité de traitement 1, au moins une unité de dégradation biologique qui est une unité de dégradation biologique aérobie permettant de faire subir un processus de dégradation biologique (ou « fermentation ») aérobie à au moins une partie des déchets biodégradables contenus dans le mélange primaire 2A de déchets, de manière à biodégrader au moins en partie lesdits déchets biodégradables et à former (en moins en partie) ainsi ledit mélange secondaire 2B de matériaux. L'unité de dégradation biologique aérobie vise avantageusement à faire subir un processus forcé, accéléré, de dégradation biologique aérobie. De manière connue, un tel processus de dégradation biologique aérobie consiste à forcer la dégradation et la putréfaction des déchets biodégradables (et en particulier la matière organique qu'ils contiennent) sous l'action de microorganismes (bactéries) aérobies naturellement présents dans le mélange primaire 2A de déchets et / ou ajoutés au mélange primaire 2A de déchets, et / ou amenés à se multiplier dans le mélange primaire 2A de déchets. Une telle unité de dégradation biologique aérobie comprend préférentiellement au moins une baie de dégradation biologique aérobie, connue en tant que telle, permettant de faire subir un cycle de dégradation biologique aérobie à au moins une partie du mélange primaire 2A de déchets de manière à biodégrader au moins en partie les déchets biodégradables dudit mélange primaire 2A de déchets.

De manière alternative ou complémentaire, l'installation de traitement peut avantageusement comprendre, en amont de ladite unité de traitement 1, au moins une unité de dégradation biologique qui est une unité de dégradation biologique anaérobie permettant de faire subir un processus de dégradation biologique (ou « digestion ») anaérobie, c'est-à-dire un processus de méthanisation, à au moins une partie des déchets biodégradables contenus dans le mélange primaire 2A de déchets, de manière à biodégrader au moins en partie lesdits déchets biodégradables, de sorte que toute ou partie d'une matière résiduelle issue dudit processus de dégradation biologique anaérobie pourra avantageusement former (au moins en partie) le mélange secondaire 2B de matériaux. On obtient également ainsi un biogaz, essentiellement composé de méthane et de dioxyde de carbone. L'unité de dégradation biologique anaérobie vise avantageusement à faire subir un processus forcé, accéléré, de dégradation biologique anaérobie. De manière connue, un tel processus de dégradation biologique anaérobie consiste à forcer la dégradation des déchets biodégradables (et en particulier la matière organique qu'ils contiennent) sous l'action de microorganismes (bactéries) anaérobies naturellement présents dans le mélange primaire 2A de déchets et / ou ajoutés au mélange primaire 2A de déchets, et / ou amenés à se multiplier dans le mélange primaire 2A de déchets. De préférence, une telle unité de dégradation biologique anaérobie comprend, de manière connue en tant que telle, au moins une cuve (« digesteur » ou « méthaniseur »), qui peut être fermée de manière étanche (en particulier à l'oxygène) après introduction du mélange primaire 2A de déchets en son sein. Au besoin, les déchets du mélange primaire 2A de déchets auront pu être préalablement humidifiés, hydratés, et / ou additionnés de microorganismes (bactéries) anaérobies, d'enzymes, ou d'un mélange de tels microorganismes anaérobies et enzymes.

Le mélange secondaire 2B de matériaux destiné à être traité par l'unité de traitement 1 de l'installation présente ainsi avantageusement une portion non négligeable de sa masse qui est formée par des matériaux biodégradables qui ont été au moins partiellement (et de préférence seulement partiellement) biodégradés, sous l'effet d'un ou de processus de dégradation biologique - aérobie et / ou anaérobie - auquel tout ou partie du mélange primaire 2A de déchets a été soumis. De préférence, lesdits matériaux biodégradables au moins partiellement biodégradés forment alors au moins 40 %, de préférence au moins 45 %, de préférence encore au moins 50 %, de préférence au moins 60 %, de préférence au moins 70 %, de préférence encore au moins 80 % de la masse du mélange secondaire 2B de matériaux mis en oeuvre par l'unité de traitement 1. En ce sens, l'unité de traitement 1 constitue alors avantageusement une unité d'affinage de matériaux au moins partiellement biodégradés.

La ou les unités de dégradation biologique aérobie et / ou anaérobie comprennent en outre avantageusement au moins une baie de séchage (ou baie de déshydratation) permettant de faire subir un séchage, une déshydratation, aux matériaux biodégradables au moins partiellement biodégradés contenus dans le mélange secondaire 2B de matériaux. De préférence, ladite baie de séchage est conçue pour réduire le taux d'humidité des matériaux biodégradables au moins partiellement biodégradés à une valeur préférentiellement comprise entre 5 % et 25 %, de préférence comprise entre 10 % et 20 %, de préférence encore comprise entre 12 % et 18 %. Un tel taux d'humidité permet avantageusement d'améliorer encore la qualité du tri dimensionnel et du tri densimétrique qui seront ultérieurement opérés respectivement par le trommel 3 et par les tables densimétriques 6, 7 de l'unité de traitement 1, notamment en abaissant la densité moyenne desdits matériaux biodégradables biodégradés par rapport à la densité moyenne des autres matériaux, non biodégradables, contenus dans ledit mélange. De plus, un tel taux d'humidité permet de limiter, voire de supprimer, le caractère collant des matériaux biodégradables biodégradés, ce qui est favorable à une bonne séparation des matériaux. Une telle déshydratation permet en outre avantageusement une stabilisation biologique des matériaux biodégradables au moins partiellement biodégradés du mélange secondaire 2B de matériaux, ce qui en facilite ainsi le stockage et la manipulation. Qui plus est, lorsque lesdits matériaux biodégradables sont avantageusement seulement partiellement biodégradés, une telle déshydratation permet d'interrompre la dégradation biologique, et de conserver ainsi une certaine compostabilité et / ou un certain potentiel méthanogène du mélange secondaire 2B de matériaux, en vue d'un processus ultérieur de compostage et / ou maturation et / ou de méthanisation.

De manière préférentielle, la série d'orifices de séparation de la paroi 4 de séparation du trommel 3 comprend au moins des orifices primaires permettant au moins de contribuer à séparer le mélange secondaire 2B de matériaux selon la première fraction 5 de matériaux et selon la deuxième fraction résiduelle de matériaux par passage de la première fraction 5 de matériaux au travers desdits orifices primaires. Ces derniers sont avantageusement répartis de façon régulière, de manière à former un maillage, sur la majorité de la surface de la paroi 4 de séparation du trommel 3. Lesdits orifices primaires de la paroi 4 de séparation sont avantageusement de dimensions adaptées pour interdire le passage de matériaux d'une taille supérieure à 20 mm, de préférence supérieure à 15 mm, de préférence supérieure à 10 mm, et de préférence encore supérieure à 8 mm. Les orifices primaires sont préférentiellement de section circulaire. Ainsi dimensionnés, les orifices primaires de la paroi 4 de séparation du trommel 3, permettent ainsi avantageusement d'écarter du mélange secondaire 2B de matériaux les matériaux de grande tailles, qui ne sont a *priori* pas susceptibles d'être suffisamment biodégradés ou qui ne sont pas du tout biodégradables. Ces matériaux de grandes tailles, qui forment donc ladite deuxième fraction résiduelle de matériaux, pourront être dirigés, en tout ou partie, vers une unité de dégradation biologique (aérobie ou anaérobie) pour y être davantage biodégradés, ou encore vers une unité de production de combustibles solides de récupération en vue de leur valorisation, par exemple.

De manière plus préférentielle encore, la série d'orifices de séparation du trommel 3 de l'unité de traitement 1 comprend également des orifices secondaires permettant de contribuer à séparer le mélange secondaire 2B de matériaux selon la première fraction 5 de matériaux et selon la deuxième fraction résiduelle de matériaux par passage de la première fraction 5 de matériaux au travers desdits orifices secondaires, ces derniers étant de dimensions adaptées pour autoriser le passage de matériaux dont la taille est comprise entre 1 fois et 1,5 fois, et de préférence égale à 1,2 fois, la taille des matériaux dont le passage est autorisé par les orifices primaires, les orifices secondaires étant disposés en amont des orifices primaires, en considération du sens de la circulation du mélange secondaire 2B de matériaux. Avantageusement, les orifices primaires de la paroi 4 de séparation étant de dimensions adaptées pour interdire le passage de matériaux d'une taille supérieure à 10 mm, les orifices secondaires de la paroi 4 de séparation sont quant à eux dimensionnés pour interdire le passage de matériaux d'une taille supérieure à 12 mm.

La paroi 4 de séparation présente ainsi avantageusement une porosité décroissante suivant sa longueur, de sorte que le mélange secondaire 2B de matériaux est d'abord mis en contact avec les orifices secondaires, puis avec les orifices primaires, la taille des orifices secondaires étant supérieure à la taille des orifices primaires. Les orifices secondaires sont préférentiellement de section circulaire. Les orifices secondaires sont préférentiellement répartis de façon régulière, de manière à former un maillage, sur une portion minoritaire de la surface de la paroi 4 de séparation qui est inoccupée par les orifices primaires. Les orifices secondaires permettent d'inclure avantageusement à la première fraction 5 de matériaux uniquement une portion de matériaux de taille supérieure à celle autorisée par les orifices primaires et contenus dans le mélange secondaire 2B de matériaux. De manière particulièrement avantageuse, une telle conception permet d'assurer que la deuxième fraction résiduelle de matériaux contienne une proportion moindre, voir sensiblement nulle, de matériaux biodégradables, même si une portion plus importante de matériaux non biodégradables ou insuffisamment biodégradés est susceptible d'être introduite dans la première fraction 5 de matériaux. De la sorte, la première fraction 5 de matériaux traversant la paroi 4 de séparation du trommel 3 peut être avantageusement essentiellement constituée de débris de matériaux biodégradables au moins partiellement biodégradés (et préférentiellement séchés), de cailloux, de débris de verre, de plastique ou éventuellement de métaux, lesquels débris présentent une taille respective très petite, avantageusement inférieure à 12 mm, avec une dispersion de tailles très restreinte. Ces débris pourront être aisément pré-triés selon leur densité par le moyen de séparation balistique 8 de l'unité de traitement 1, tel que décrit précédemment, avant d'être dirigés vers les tables densimétriques 6, 7 de l'unité de traitement 1 afin de subir efficacement un tri densimétrique plus fin et plus précis.

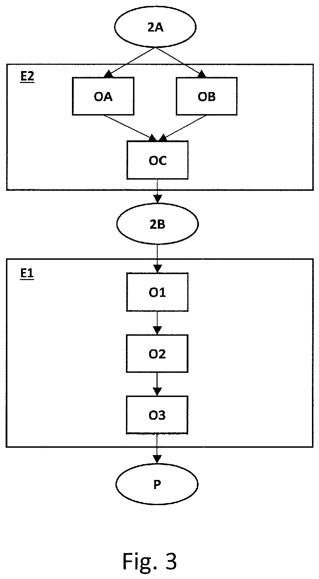

Comme introduit précédemment, l'invention concerne également, en tant que telle, un procédé de traitement d'un mélange primaire 2A de déchets issus d'une collecte d'ordures ménagères et assimilées, tel que ce dernier a été défini précédemment. Le procédé de traitement selon l'invention, tel qu'il va être décrit plus en détail ci-après, est préférentiellement destiné à être mis en oeuvre à l'aide d'une installation de traitement conforme à l'invention, tel que cette dernière a été présentée ci-avant. Réciproquement l'installation de traitement décrite ci-avant est avantageusement destinée à mettre en oeuvre le procédé de traitement selon l'invention. Ainsi les caractéristiques, définitions, effets et avantages décrits en lien ci-avant avec l'installation de traitement s'appliquent - sauf éventuelle mention contraire - mutatis mutandis au procédé de traitement selon l'invention, et réciproquement. Ceci étant, l'installation de traitement selon l'invention n'est bien évidemment pas limitée à la seule mise en oeuvre du procédé de traitement selon l'invention, et ce dernier, en retour, n'est pas limité à une mise en oeuvre à l'aide uniquement d'une installation de traitement telle que décrite précédemment. Un procédé de traitement conforme à l'invention est illustré de manière schématique à la figure 3.

Conformément à l'invention, le procédé de traitement comprend une étape E1 de traitement d'un mélange secondaire 2B de matériaux obtenu à partir dudit mélange primaire 2A de déchets, une portion non négligeable de la masse dudit mélange secondaire 2B de matériaux étant formée par des matériaux biodégradables. L'étape E1 de traitement constitue donc avantageusement une étape de post-traitement ou d'affinage de matériaux issus d'un premier traitement réalisé préalablement au cours du procédé de traitement, et plus spécifiquement, une étape de post-traitement ou d'affinage d'un mélange riche en matériaux biodégradables. Préférentiellement, les matériaux biodégradables en question forment au moins 40 %, de préférence au moins 45 %, de préférence encore au moins 50 % de la masse du mélange secondaire de matériaux mis en oeuvre par l'unité de traitement.

Ladite étape E1 de traitement comprend successivement les opérations suivantes :
- une opération O1 au cours de laquelle on introduit ledit mélange secondaire 2B de matériaux dans un trommel 3 rotatif pourvu d'une paroi 4 de séparation pourvue d'une série d'orifices de séparation traversants, et on sépare ledit mélange secondaire 2B de matériaux en une première fraction 5 de matériaux franchissant ladite paroi 4 de séparation par l'intermédiaire de la série d'orifices de séparation et en une deuxième fraction résiduelle de matériaux, le mélange secondaire 2B de matériaux circulant le long de ladite paroi de séparation pour être ainsi séparé,
- une opération 02 au cours de laquelle on sépare, à l'aide d'un moyen de séparation balistique 8, ladite première fraction 5 de matériaux en au moins une première et une deuxième sous-fractions 9, 10 de matériaux, la première sous-fraction 9 de matériaux étant formée de matériaux présentant une densité moyenne inférieure à la densité moyenne des matériaux formant la deuxième sous-fraction 10 de matériaux, et
- une opération 03 au cours de laquelle on fait subir un tri densimétrique à chacune desdites première et deuxième sous-fractions 9, 10 de matériaux respectivement à l'aide d'au moins une première et d'une deuxième tables densimétriques (distinctes l'une de l'autre), chacune alimentée par ledit moyen de séparation balistique 8.

Le procédé de traitement conforme à invention repose ainsi sur une combinaison d'un tri dimensionnel, réalisé à l'aide du trommel 3, et d'un tri densimétrique, réalisé à l'aide des tables densimétriques 6, 7. Le procédé de traitement conforme à l'invention met ainsi en oeuvre au moins deux tables densimétriques 6, 7 distinctes, avantageusement agencées en parallèle vis-à-vis du flux de matériaux à traiter, chacune d'entre elles étant alimentée par une sous-fraction 9, 10 particulière de la première fraction 5 de matériaux triée par le trommel 3. Dès lors, le flux de matériaux triés sortants du trommel 3 par la paroi 4 de séparation de ce dernier peut être facilement géré, même à des débits très élevés, en répartissant la charge sur les deux (ou plus) tables densimétriques 6, 7. Comme évoqué précédemment en lien avec l'installation de traitement, l'invention repose en outre sur le constat que les performances d'une table densimétrique, en termes à la fois de débit et de précision de tri, peuvent être optimisées non seulement en pratiquant un tri dimensionnel en amont de la table densimétrique de manière à réduire la disparité dimensionnelle des matériaux soumis à la table densimétrique, et en contrôlant le débit de matériaux entrants dans la table densimétrique, mais également en alimentant la table densimétrique en matériaux dont la disparité de densité a été contrôlée, limitée, en amont de la table densimétrique. L'invention repose par ailleurs sur l'idée qu'une telle opération de pré-tri densimétrique de la première fraction 5 de matériaux issue du trommel 3 peut être réalisé, de manière simple et efficace, à l'aide d'un moyen de séparation balistique 8. Ainsi, le procédé de traitement conforme à l'invention permet avantageusement de trier rapidement, de manière particulièrement précise et efficace, de grands volumes de déchets ménagers, ce qui autorise in fine un recyclage et / ou une valorisation particulièrement qualitatifs d'une portion très importante du mélange primaire 2A de déchets, et en particulier du mélange secondaire 2B de matériaux issus de ce dernier.

Ladite étape E1 de traitement est avantageusement mise en oeuvre à l'aide d'une unité de traitement 1 conforme à la description détaillée qui en été faite précédemment en lien avec l'installation de traitement, et telle qu'elle est illustrée en exemple à la figure 1. En particulier, selon un mode de réalisation préférentiel, le moyen de séparation balistique 8 mis en oeuvre au cours de l'opération 02 comprend :
- une rampe 12 de chute inclinée comprenant au niveau d'une extrémité amont une portion de rampe, dite portion de collecte 13, qui est positionnée en regard de la paroi 4 de séparation du trommel 3 pour collecter ladite première fraction 5 de matériaux, et une extrémité aval 14 opposée qui est positionnée au-dessus et à distance d'une portion d'alimentation 15 du moyen de convoyage 11, et
- au moins un volet de répartition balistique 16 qui définit, sur une surface de convoyage dudit moyen de convoyage 11, au moins une première zone de convoyage 17 de ladite première sous-fraction 9 de matériaux et une deuxième zone de convoyage 18 de ladite deuxième sous-fraction 10 de matériaux.

Ledit moyen de convoyage 11 comporte alors avantageusement une portion d'évacuation 19 par l'intermédiaire de laquelle les première et deuxième zones de convoyage 17, 18 alimentent chacune respectivement lesdites première et deuxième tables densimétriques 6, 7. Le moyen de séparation balistique 8 et le moyen de convoyage 11 mis en oeuvre par le procédé de traitement sont avantageusement respectivement conformes à ceux décrits précédemment en détail en lien avec l'installation de traitement, et illustrés en exemple à la figure 2.

De préférence, au moins une partie des déchets contenus dans ledit mélange primaire 2A de déchets a subi un processus de dégradation biologique, de sorte à biodégrader au moins en partie (et de préférence encore seulement en partie) lesdits déchets biodégradables et à former le mélange secondaire 2B de déchets. Une portion non négligeable de la masse du mélange secondaire 2B de matériaux traité au cours de l'étape E1 de traitement est ainsi avantageusement formée de matériaux biodégradables qui ont été au moins partiellement (et de préférence encore seulement en partie) biodégradés. A ce titre, le procédé de traitement peut alors comprendre, préalablement à l'étape E1 de traitement, une étape E2 de dégradation biologique permettant de faire subir un processus de dégradation biologique à au moins une partie des déchets biodégradables contenus dans ledit mélange primaire 2A de déchets, de manière à dégrader au moins en partie lesdits déchets biodégradables et à former ainsi ledit mélange secondaire 2B de matériaux. Il s'agit avantageusement d'un processus forcé, accéléré, de dégradation biologique.

Avantageusement, au moins une partie des déchets contenus dans ledit mélange primaire 2A de déchets a subi un processus de dégradation biologique qui est un processus de dégradation biologique aérobie, de sorte à biodégrader au moins en partie lesdits déchets biodégradables et à former ledit mélange secondaire 2B de matériaux. Une portion non négligeable de la masse du mélange secondaire 2B de matériaux traité au cours de l'étape E1 de traitement est ainsi formée de matériaux biodégradables qui ont été au moins partiellement biodégradés, compostés, sous l'effet d'un processus de dégradation biologique (ou « fermentation ») aérobie auquel tout ou partie du mélange primaire 2A de déchets a été préalablement soumis. A ce titre, l'étape E2 de dégradation biologique peut ainsi comprendre une opération OA de dégradation biologique aérobie permettant de faire subir un processus de dégradation biologique aérobie à au moins une partie des déchets biodégradables contenus dans ledit mélange primaire 2A de déchets, de manière à dégrader au moins en partie lesdits déchets biodégradables et à former ainsi ledit mélange secondaire 2B de matériaux. Il s'agit avantageusement d'un processus forcé, accéléré, de dégradation biologique aérobie. De manière connue, un tel processus de dégradation biologique aérobie consiste à forcer la dégradation et la putréfaction des déchets biodégradables sous l'action de microorganismes naturellement présents dans le mélange primaire 2A de déchets et / ou ajoutés au mélange primaire 2A de déchets, et / ou amenés à se multiplier dans le mélange primaire 2A de déchets. Une telle opération OA de dégradation biologique aérobie peut être avantageusement mise en oeuvre à l'aide d'au moins une unité de dégradation biologique aérobie comprenant au moins une baie de dégradation biologique anaérobie, conformément à la description qui en a été faite ci-avant en lien avec l'installation de traitement.

De manière alternative ou complémentaire, au moins une partie des déchets contenus dans ledit mélange primaire 2A de déchets a subi un processus de dégradation biologique qui est un processus de dégradation biologique anaérobie, de manière à biodégrader au moins en partie lesdits déchets biodégradables, ledit mélange secondaire 2B de matériaux étant alors formé de toute ou partie d'une matière résiduelle issue dudit processus de dégradation biologique anaérobie. Une portion non négligeable de la masse du mélange secondaire 2B de matériaux traité au cours de l'étape E1 de traitement est formée, dans ce cas, de matériaux biodégradables qui ont été au moins partiellement biodégradés sous l'effet d'un processus de dégradation biologique (ou « digestion ») anaérobie auquel tout ou partie du mélange primaire 2A de déchets a été préalablement soumis. A ce titre, l'étape E2 de dégradation biologique peut ainsi avantageusement comprendre une opération OB de dégradation biologique anaérobie permettant de faire subir un processus de dégradation biologique anaérobie, c'est-à-dire un processus de méthanisation, à au moins une partie des déchets biodégradables contenus dans ledit mélange primaire 2A de déchets, ledit mélange secondaire 2B de matériaux étant alors formé de toute ou partie d'une matière résiduelle issue dudit processus de dégradation biologique anaérobie. Il s'agit avantageusement d'un processus forcé, accéléré, de dégradation biologique anaérobie. De manière connue, un tel processus de dégradation biologique anaérobie consiste à forcer la dégradation des déchets biodégradables (et en particulier la matière organique qu'ils contiennent) sous l'action de microorganismes (bactéries) anaérobies naturellement présents dans le mélange primaire 2A de déchets et / ou ajoutés au mélange primaire 2A de déchets, et / ou amenés à se multiplier dans le mélange primaire 2A de déchets. Une telle opération OB de dégradation biologique anaérobie peut être avantageusement mise en oeuvre à l'aide d'au moins une unité de dégradation biologique anaérobie comprenant au moins une baie de dégradation biologique anaérobie, conformément à la description qui en a été faite ci-avant en lien avec l'installation de traitement.

Ladite portion non négligeable formée de matériaux biodégradables qui ont été au moins partiellement biodégradés - de manière aérobie et / ou anaérobie - représente alors de préférence au moins 40 %, de préférence encore au moins 45 %, de préférence au moins 50 %, de préférence au moins 60 %, de préférence au moins 70 %, de préférence encore au moins 80 % de la masse dudit mélange secondaire 2B de matériaux. En ce sens, l'étape E1 de traitement du procédé de traitement constitue alors plus spécifiquement une étape d'affinage de matériaux au moins partiellement biodégradés.

De manière plus avantageuse encore, lesdits matériaux biodégradables au moins partiellement dégradés sont des matériaux biodégradables au moins partiellement biodégradés et séchés, qui présentent préférentiellement un taux d'humidité dont la valeur est préférentiellement comprise entre 5 % et 25 %, de préférence comprise entre 10 % et 20 %, de préférence encore comprise entre 12 % et 18 %. Un tel taux d'humidité permet avantageusement d'améliorer encore la qualité du tri dimensionnel et du tri densimétrique qui seront ultérieurement opérés au cours de l'étape E1 de traitement, notamment en abaissant la densité moyenne desdits matériaux (biodégradables) biodégradés par rapport à la densité moyenne des autres matériaux, non biodégradables, contenus dans ledit mélange. De plus, un tel taux d'humidité permet de limiter, voire de supprimer, le caractère collant des matériaux biodégradables biodégradés, ce qui est favorable à une bonne séparation des matériaux au cours de l'étape E1 de traitement. Une telle déshydratation permet en outre avantageusement une stabilisation biologique des matériaux biodégradables au moins partiellement biodégradés du mélange secondaire 2B de matériaux, ce qui en facilite ainsi le stockage et la manipulation. Qui plus est, lorsque lesdits matériaux biodégradables sont avantageusement seulement partiellement biodégradés, une telle déshydratation permet d'interrompre la dégradation biologique, et de conserver ainsi une certaine compostabilité et / ou un certain potentiel méthanogène du mélange secondaire 2B de matériaux, en vue d'un processus ultérieur de compostage et / ou maturation et / ou de méthanisation. A ce titre, l'étape E2 de dégradation biologique peut ainsi avantageusement comprendre une opération OC, successive à l'opération OA et / ou à l'opération OB, au cours de laquelle on fait subir un séchage, une déshydratation, aux matériaux biodégradables au moins partiellement biodégradés contenus dans le mélange secondaire 2B de matériaux, de sorte qu'une portion non négligeable de la masse dudit mélange secondaire 2B de matériaux est ainsi formée de matériaux biodégradables au moins partiellement biodégradés et séchés, déshydraté. Ladite opération OC est alors avantageusement réalisée de telle manière que lesdits matériaux biodégradables au moins partiellement biodégradés et séchés présentent un taux d'humidité dont la valeur est préférentiellement comprise entre 5 % et 25 %, de préférence comprise entre 10 % et 20 %, de préférence encore comprise entre 12 % et 18 %. Une telle opération OC de séchage peut être avantageusement mise en oeuvre à l'aide d'au moins une unité de dégradation biologique aérobie et / ou anaérobie comprenant au moins une baie de séchage (ou baie de déshydratation), conformément à la description qui en a été faite ci-avant en lien avec l'installation de traitement.

De manière préférentielle, la conception de la série d'orifices de séparation de la paroi 4 de séparation du trommel 3 mis en oeuvre au cours de l'opération O1 de l'étape E1 de traitement est conforme à celle décrite ci-avant en lien avec l'installation de traitement. En particulier, ladite série d'orifices de séparation comprend au moins des orifices primaires, qui sont avantageusement répartis de façon régulière, de manière à former un maillage, sur la majorité de la surface de la paroi 4 de séparation du trommel 3, et qui sont avantageusement de dimensions adaptées pour interdire le passage de matériaux d'une taille supérieure à 20 mm, de préférence supérieure à 15 mm, de préférence supérieure à 10 mm, et de préférence encore supérieure à 8 mm. Les orifices primaires sont préférentiellement de section circulaire. Ainsi dimensionnés, les orifices primaires de la paroi 4 de séparation du trommel 3, permettent ainsi avantageusement d'écarter du mélange secondaire 2B de matériaux les matériaux de grande tailles, qui ne sont a *priori* pas susceptibles d'être suffisamment biodégradés (et donc de taille assez réduite). Ces matériaux de grandes tailles, qui forment donc ladite deuxième fraction résiduelle de matériaux, pourront être soumis, en tout ou partie, à nouvelle étape de dégradation biologique (aérobie ou anaérobie) pour être davantage biodégradés ou encore à une étape de production de combustibles solides de récupération en vue de leur valorisation, par exemple. De manière plus préférentielle encore, la série d'orifices de séparation du trommel 3 comprend également des orifices secondaires, lesquels sont de dimensions adaptées pour autoriser le passage de matériaux dont la taille est comprise entre 1 fois et 1,5 fois, et de préférence égale à 1,2 fois, la taille des matériaux dont le passage est autorisé par les orifices primaires, et sont disposés en amont des orifices primaires, en considération du sens de la circulation du mélange secondaire 2B de matériaux. Avantageusement, les orifices primaires de la paroi 4 de séparation étant de dimensions adaptées pour interdire le passage de matériaux d'une taille supérieure à 10 mm, les orifices secondaires de la paroi 4 de séparation sont quant à eux dimensionnés pour interdire le passage de matériaux d'une taille supérieure à 12 mm.

Comme déjà expliqué ci-avant en lien avec l'installation de traitement, la paroi 4 de séparation présente ainsi avantageusement une porosité décroissante suivant sa longueur, de sorte que le mélange secondaire 2B de matériaux est d'abord mis en contact avec les orifices secondaires, puis avec les orifices primaires, la taille des orifices secondaires étant supérieure à la taille des orifices primaires. Les orifices secondaires sont préférentiellement de section circulaire. Les orifices secondaires sont préférentiellement répartis de façon régulière, de manière à former un maillage, sur une portion minoritaire de la surface de la paroi 4 de séparation qui est inoccupée par les orifices primaires. Les orifices secondaires permettent d'inclure avantageusement à la première fraction 5 de matériaux uniquement une portion de matériaux de taille supérieure à celle autorisée par les orifices primaires et contenus dans le mélange secondaire 2B de matériaux. De manière particulièrement avantageuse, une telle conception permet d'assurer que la deuxième fraction résiduelle de matériaux contienne une proportion moindre, voir sensiblement nulle, de matériaux biodégradables, même si une portion plus importante de matériaux non biodégradables ou insuffisamment biodégradés est susceptible d'être introduite dans la première fraction 5 de matériaux. De la sorte, la première fraction 5 de matériaux traversant la paroi 4 de séparation du trommel 3 peut être avantageusement essentiellement constituée de débris de matériaux biodégradables au moins partiellement biodégradés (et préférentiellement séchés), de cailloux, de débris de verre, de plastique ou éventuellement de métaux, lesquels débris présentent une taille respective très petite, avantageusement inférieure à 12 mm, avec une dispersion de taille très restreinte. Ces débris pourront être aisément pré-triés selon leur densité par le moyen de séparation balistique 8 au cours de l'opération 02 de l'étape E1 de traitement, tel que décrite précédemment, avant d'être dirigés vers les tables densimétriques 6, 7 afin de subir efficacement un tri densimétrique plus fin et plus précis au cours de l'opération 03 de l'étape E1 de traitement.

A l'aide des installation et procédé de traitement décrits ci-dessus, il est ainsi avantageusement possible d'obtenir à partir d'un mélange primaire 2A de déchets issus d'une collecte d'ordures ménagères et assimilées, avec un excellent rendement, un produit P essentiellement formé de matière biodégradable avantageusement au moins partiellement biodégradée (et de préférence alors seulement partiellement biodégradée) qui est particulièrement pure, bien affinée. Un tel produit P peut dès lors être ultérieurement soumis à un cycle de compostage et / ou de maturation complémentaire conduisant à l'obtention d'un amendement organique ou d'un compost de qualité particulièrement élevée. Un tel compost satisfait alors avantageusement notamment aux exigences de la norme française NF U 44-051 : 2006 - « Amendements organiques - Dénominations, spécifications et marquage ». Il est également possible de soumettre ultérieurement un tel produit P à un processus de méthanisation, après l'avoir éventuellement réhydraté si nécessaire, pour en transformer la matière biodégradable qu'il contient en biogaz. Contrairement aux processus de méthanisation connus de déchets issus d'une collecte d'ordures ménagères, un tel processus de méthanisation du produit P obtenu grâce à l'invention sera dès lors particulièrement efficace et produira avantageusement très peu de, voire même aucun, déchets ultimes à enfouir ou incinérer. Qui plus est, du fait de la pureté dudit produit P, une fraction biodégradable résiduelle (« digestat ») issue d'un tel processus de méthanisation ultérieur pourra être avantageusement elle-même soumise à un processus de compostage et / ou de maturation supplémentaire en vue de sa valorisation agronomique, par exemple en tant qu'intrant dans l'agriculture. Le processus de méthanisation sera par ailleurs moins coûteux à mettre en oeuvre puisqu'il ne sera plus nécessaire en particulier de surdimensionner la ou les cuves pour tenir compte d'un volume important de matériaux non biodégradables mélangés aux matériaux biodégradables à méthaniser.

Bien évidemment, l'unité de traitement 1 de l'installation pourrait alternativement être destinée à traiter un mélange secondaire de matériaux dont les matériaux biodégradables qu'il contient n'ont pas (ou pas encore) subi de dégradation biologique aérobie et / ou anaérobie. Symétriquement, l'étape E1 de traitement du procédé pourrait alternativement être mise en oeuvre pour traiter un mélange secondaire de matériaux dont les matériaux biodégradables qu'il contient n'ont pas (ou pas encore) subi de dégradation biologique aérobie. En outre, et bien qu'une portion non négligeable de la masse dudit mélange secondaire de matériaux soit formée par des matériaux biodégradables, comme évoqué ci-avant, il n'en reste pas moins envisageable que l'unité de traitement 1 de l'installation puisse être alimentée, par exemple, par une portion dudit mélange secondaire de matériaux qui serait exclusivement formée de matériaux non biodégradables (par exemple dans une optique d'affinage de matériaux recyclables et / ou valorisables préalablement extraits du mélange primaire 2A de déchets). Dans ce cas, l'installation ne comprendrait pas nécessairement d'unité(s) de dégradation biologique aérobie et / ou anaérobie, ou l'unité de traitement ne serait pas nécessairement positionnée en aval de telles unités de dégradation biologique aérobie et / ou anaérobie. La série d'orifices de séparation du trommel 3 pourrait comprendre des orifices primaires et des orifices secondaires, disposés en amont desdits orifices primaires en considération du sens de la circulation du mélange secondaire de matériaux, comme décrits ci-dessus, mais les dimensions et rapport de dimensions de ces derniers pourraient être de valeurs différentes de celles évoquées précédemment, en fonction de la composition et de la nature du mélange secondaire de matériaux. S'agissant du procédé de traitement, il n'en reste pas moins symétriquement envisageable que l'étape E1 de traitement soit appliquée, par exemple, à une portion dudit mélange secondaire de matériaux qui serait exclusivement formée de matériaux non biodégradables (par exemple dans une optique d'affinage de matériaux recyclables et / ou valorisables préalablement extraits du mélange primaire 2A de déchets).

A la lecture de la description détaillée qui vient d'en être faite, on comprend que l'installation et le procédé de traitement sont particulièrement faciles à mettre en oeuvre dans un contexte industriel, et en particulier dans le cadre d'un procédé industriel de traitement mécano-biologique d'ordures ménagères et assimilées, et permettent un traitement du mélange primaire 2A de déchets entrant de façon majoritairement, voire totalement automatisée. L'amélioration des performances apportée par l'installation et le procédé de traitement en matière de rapidité et de précision de tri permettent avantageusement de générer des produits, tels qu'en particulier du compost ou du biogaz, dont la valeur est très supérieure à la valeur initiale du mélange primaire 2A de déchets.

### POSSIBILITE D'APPLICATION INDUSTRIELLE

L'invention trouve son application industrielle dans la conception, la réalisation et la mise en oeuvre d'installations et de procédés de traitement des déchets, et en particulier de traitement de déchets issus d'une collecte d'ordures ménagères, en vue de leur recyclage, de leur valorisation ou de leur retraitement.

## Revendications

1. Installation de traitement d'un mélange primaire (2A) de déchets issus d'une collecte d'ordures ménagères et assimilées, une portion non négligeable de la masse dudit mélange primaire (2A) de déchets étant formée par des déchets biodégradables, ledit mélange primaire (2A) de déchets comprenant des déchets non biodégradables, ladite installation de traitement comprenant une unité de traitement (1) d'un mélange secondaire (2B) de matériaux obtenu à partir dudit mélange primaire 2A de déchets, une portion non négligeable de la masse dudit mélange secondaire (2B) de matériaux étant formée par des matériaux biodégradables, ladite unité de traitement (1) comprenant un trommel (3) rotatif pourvu d'une paroi (4) de séparation pourvue d'une série d'orifices de séparation traversants permettant de séparer le mélange secondaire (2B) de matériaux en une première fraction (5) de matériaux franchissant ladite paroi (4) de séparation par l'intermédiaire de la série d'orifices de séparation et en une deuxième fraction résiduelle de matériaux, le mélange secondaire (2B) de matériaux étant destiné à circuler le long de ladite paroi (4) de séparation pour être ainsi séparé, ladite unité de traitement (1) comprenant également au moins une première et une deuxième tables densimétriques (6, 7), et un moyen de séparation balistique (8) positionné entre ledit trommel (3) et lesdites tables densimétriques (6, 7) pour collecter ladite première fraction (5) de matériaux et alimenter les première et deuxième tables densimétriques (6, 7) respectivement en au moins une première et une deuxième sous-fractions (9, 10) de matériaux, la première sous-fraction (9) de matériaux étant formée de matériaux présentant une densité moyenne inférieure à une densité moyenne des matériaux formant la deuxième sous-fraction (10) de matériaux.

2. Installation de traitement selon la revendication précédente, dans laquelle ladite unité de traitement (1) comprend un moyen de convoyage (11) positionné à une altitude inférieure à une altitude respective du trommel (3), ledit moyen de séparation balistique (8) comprenant :
- une rampe (12) de chute inclinée comprenant au niveau d'une extrémité amont une portion de rampe, dite portion de collecte (13), qui est positionnée en regard de la paroi (4) de séparation du trommel (3) pour collecter ladite première fraction (5) de matériaux, et présentant une extrémité aval (14) opposée qui est positionnée au-dessus et à distance d'une portion d'alimentation (15) du moyen de convoyage (11), et
- au moins un volet de répartition balistique (16) qui définit, sur une surface de convoyage dudit moyen de convoyage (11), au moins une première zone de convoyage (17) de ladite première sous-fraction (9) de matériaux et une deuxième zone de convoyage (18) de ladite deuxième sous-fraction (10) de matériaux,
ledit moyen de convoyage (11) comportant une portion d'évacuation (19) par l'intermédiaire de laquelle les première et deuxième zones de convoyage (17, 18) sont destinées à alimenter chacune respectivement lesdites première et deuxième tables densimétriques (6, 7).

3. Installation de traitement selon la revendication précédente, dans laquelle ladite rampe (12) de chute comprend une portion de rampe, dite portion accélératrice (20), qui prolonge ladite portion de collecte (13) jusqu'à l'extrémité aval (14) de la rampe (12) de chute et dont l'inclinaison moyenne est réglable par rapport à la verticale.

4. Installation de traitement selon la revendication 2 ou 3, dans laquelle ladite paroi (4) de séparation s'étend selon un axe (A-A') d'extension longitudinale autour duquel ladite paroi (4) de séparation est montée à rotation, ladite rampe (12) de chute s'étendant longitudinalement suivant ledit axe (A-A') d'extension longitudinale de la paroi (4) de séparation.

5. Installation de traitement selon la revendication précédente, dans laquelle la paroi (4) de séparation du trommel (3) présente un premier plan (P1) vertical et un deuxième plan (P2) orthogonal audit un premier plan (P1), lesdits premier et deuxième plans (P1, P2) contenant l'axe (A-A') d'extension longitudinale de la paroi (4) de séparation et définissant, en-dessous dudit deuxième plan (P2), un premier et deuxième secteurs angulaires (28, 29) consécutifs, le deuxième secteur angulaire (29) étant situé à l'aval du premier secteur angulaire (28) dans le sens de rotation de la paroi (4) de séparation, la rampe (12) de chute étant positionnée en regard dudit deuxième secteur angulaire (29).

6. Installation de traitement selon la revendication 3 et l'une quelconque des revendications 4 et 5, dans laquelle la portion accélératrice (20) de la rampe (12) de chute présente une inclinaison moyenne par rapport à la verticale qui varie suivant ledit axe (A-A') d'extension longitudinale de la paroi (4) de séparation.

7. Installation de traitement selon l'une quelconque des revendications précédentes, laquelle comprend, en amont de ladite unité de traitement (1), une unité de dégradation biologique aérobie permettant de faire subir un processus de dégradation biologique aérobie à au moins une partie des déchets biodégradables contenus dans ledit mélange primaire (2A) de déchets, de manière à biodégrader au moins en partie lesdits déchets biodégradables et à former ainsi ledit mélange secondaire (2B) de matériaux.

8. Installation de traitement selon l'une quelconque des revendications précédentes, laquelle comprend, en amont de ladite unité de traitement (1), une unité de dégradation biologique anaérobie permettant de faire subir un processus de dégradation biologique anaérobie à au moins une partie des déchets biodégradables contenus dans ledit mélange primaire (2A) de déchets, de manière à biodégrader au moins en partie lesdits déchets biodégradables, de sorte que toute ou partie d'une matière résiduelle issue dudit processus de dégradation biologique anaérobie forme ledit mélange secondaire (2B) de matériaux.

9. Installation de traitement selon l'une quelconque des revendications 7 et 8, dans laquelle la ou les unités de dégradation biologique aérobie et / ou anaérobie comprend au moins une baie de séchage permettant de faire subir un séchage aux matériaux biodégradables au moins partiellement biodégradés contenus dans le mélange secondaire (2B) de matériaux.

10. Installation de traitement selon l'une quelconque des revendications 7 à 9, dans laquelle la série d'orifices de séparation de la paroi (4) de séparation du trommel (3) comprend au moins des orifices primaires permettant au moins de contribuer à séparer le mélange secondaire (2B) de matériaux selon la première fraction (5) de matériaux et selon la deuxième fraction résiduelle de matériaux par passage de la première fraction (5) de matériaux au travers desdits orifices primaires, ces derniers étant de dimensions adaptées pour interdire le passage de matériaux d'une taille supérieure à 20 mm, de préférence supérieure à 15 mm, de préférence supérieure à 10 mm, et de préférence encore supérieure à 8 mm.

11. Installation de traitement selon la revendication précédente, dans laquelle ladite série d'orifices de séparation comprend également des orifices secondaires permettant de contribuer à séparer le mélange secondaire (2B) de matériaux selon la première fraction (5) de matériaux et selon la deuxième fraction résiduelle de matériaux par passage de la première fraction (5) de matériaux au travers desdits orifices secondaires, ces derniers étant de dimensions adaptées pour autoriser le passage de matériaux dont la taille est comprise entre 1 fois et 1,5 fois, et de préférence égale à 1,2 fois, la taille des matériaux dont le passage est autorisé par les orifices primaires, les orifices secondaires étant disposés en amont des orifices primaires, en considération du sens de la circulation du mélange secondaire (2B) de matériaux.

12. Procédé de traitement d'un mélange primaire (2A) de déchets issus d'une collecte d'ordures ménagères et assimilées, une portion non négligeable de la masse du mélange primaire (2A) de déchets étant formée par des déchets biodégradables, ledit mélange primaire (2A) de déchets comprenant des déchets non biodégradables, ledit procédé comprenant une étape E1 de traitement d'un mélange secondaire (2B) de matériaux obtenu à partir dudit mélange primaire (2A) de déchets, une portion non négligeable de la masse dudit mélange secondaire (2B) de matériaux étant formée par des matériaux biodégradables, ladite étape E1 de traitement comprenant successivement les opérations suivantes :
- une opération O1 au cours de laquelle on introduit ledit mélange secondaire (2B) de matériaux dans un trommel (3) rotatif pourvu d'une paroi (4) de séparation pourvue d'une série d'orifices de séparation traversants, et on sépare ledit mélange secondaire (2B) de matériaux en une première fraction (5) de matériaux franchissant ladite paroi (4) de séparation par l'intermédiaire de la série d'orifices de séparation et en une deuxième fraction résiduelle de matériaux, le mélange secondaire (2B) de matériaux circulant le long de ladite paroi (4) de séparation pour être ainsi séparé,
- une opération 02 au cours de laquelle on sépare, à l'aide d'un moyen de séparation balistique (8), ladite première fraction (5) de matériaux en au moins une première et une deuxième sous-fractions (9, 10) de matériaux, la première sous-fraction (9) de matériaux étant formée de matériaux présentant une densité moyenne inférieure à la densité moyenne des matériaux formant la deuxième sous-fraction (10) de matériaux, et
- une opération 03 au cours de laquelle on fait subir un tri densimétrique à chacune desdites première et deuxième sous-fractions (9, 10) de matériaux respectivement à l'aide d'au moins une première et d'une deuxième tables densimétriques (6, 7), chacune alimentée par ledit moyen de séparation balistique (8).

13. Procédé de traitement selon la revendication précédente, dans lequel ledit moyen de séparation balistique (8) mis en oeuvre au cours de l'opération 02 comprend
- une rampe (12) de chute inclinée comprenant au niveau d'une extrémité amont une portion de rampe, dite portion de collecte (13), qui est positionnée en regard de la paroi (4) de séparation du trommel (3) pour collecter ladite première fraction (5) de matériaux, et une extrémité aval (14) opposée qui est positionnée au-dessus et à distance d'une portion d'alimentation (15) du moyen de convoyage (11), et
- au moins un volet de répartition balistique (16) qui définit, sur une surface de convoyage dudit moyen de convoyage (11), au moins une première zone de convoyage (17) de ladite première sous-fraction (9) de matériaux et une deuxième zone de convoyage (18) de ladite deuxième sous-fraction (10) de matériaux,
ledit moyen de convoyage (11) comportant une portion d'évacuation (19) par l'intermédiaire de laquelle les première et deuxième zones de convoyage (17, 18) alimentent chacune respectivement lesdites première et deuxième tables densimétriques (6, 7).

14. Procédé de traitement selon l'une quelconque des revendications 12 et 13, dans lequel au moins une partie des déchets contenus dans ledit mélange primaire (2A) de déchets a subi un processus de dégradation biologique aérobie, de sorte à biodégrader au moins en partie lesdits déchets biodégradables et à former ledit mélange secondaire (2B) de matériaux.

15. Procédé de traitement selon l'une quelconque des revendications 12 à 14, dans lequel au moins une partie des déchets contenus dans ledit mélange primaire (2A) de déchets a subi un processus de dégradation biologique anaérobie, de manière à biodégrader au moins en partie lesdits déchets biodégradables, ledit mélange secondaire (2B) de matériaux étant formé de toute ou partie d'une matière résiduelle issue dudit processus de dégradation biologique anaérobie.

## Patentansprüche

1. Aufbereitungsanlage zur Behandlung eines primären Abfallgemisches (2A) aus einer Sammlung von Hausmüll und ähnlichen Abfällen, wobei ein nicht vernachlässigbarer Anteil der Masse des primären Abfallgemisches (2A) aus biologisch abbaubaren Abfällen gebildet wird, wobei das primäre Abfallgemisch (2A) biologisch nicht abbaubare Abfälle umfasst, die Aufbereitungsanlage eine Verarbeitungseinheit (1) zur Verarbeitung einer sekundären Materialmischung (2B) umfasst, die aus der primären Abfallmischung (2A) erhalten wird, wobei ein nicht vernachlässigbarer Anteil der Masse der sekundären Materialmischung (2B) durch biologisch abbaubare Materialien gebildet wird, die Verarbeitungseinheit (1) eine drehbare Trommel (3) mit einer Trennwand (4) umfasst, die mit einer Reihe von durchgehenden Trennöffnungen versehen ist, die es ermöglichen, die sekundäre Materialmischung (2B) in eine erste Materialfraktion (5), die die Trennwand (4) über die Reihe von Trennöffnungen passiert, und in eine zweite, restliche Fraktion von Materialien zu trennen, wobei die sekundäre Materialmischung (2B) dazu bestimmt ist, entlang der Trennwand (4) zu zirkulieren, um dadurch getrennt zu werden, wobei die Verarbeitungseinheit (1) auch mindestens einen ersten und einen zweiten densimetrischen Tisch (6, 7) und ein ballistisches Trennmittel (8) umfasst, das zwischen der Trommel (3) und den densimetrischen Tischen (6, 7) positioniert ist, um die erste Materialfraktion (5) zu sammeln und den ersten und zweiten densimetrischen Tisch (6, 7) jeweils mit mindestens einer ersten und zweiten Teilfraktion (9, 10) von Materialien zu versorgen, wobei die erste Teilfraktion (9) von Materialien aus Materialien gebildet wird, die eine mittlere Dichte aufweisen, die geringer ist als eine mittlere Dichte der Materialien, die die zweite Teilfraktion (10) von Materialien bilden.

2. Aufbereitungsanlage nach dem vorhergehenden Anspruch, bei der die Verarbeitungseinheit (1) ein Fördermittel (11) umfasst, das in einer Höhe unterhalb einer jeweiligen Höhe der Trommel (3) positioniert ist, wobei das ballistische Trennmittel (8) umfasst:
- eine geneigte Fallrampe (12), die auf Höhe eines stromaufwärts gelegenen Endes einen Rampenabschnitt, den sogenannten Sammelabschnitt (13), umfasst, der gegenüber der Trennwand (4) der Trommel (3) positioniert ist, um die erste Materialfraktion (5) zu sammeln, und ein entgegengesetztes stromabwärts gelegenes Ende (14) aufweist, das über und in einem Abstand von einem Zuführabschnitt (15) des Fördermittels (11) positioniert ist, und
- mindestens eine ballistische Verteilerklappe (16), die auf einer Förderfläche des Fördermittels (11) mindestens einen ersten Förderbereich (17) für die erste Teilfraktion (9) von Materialien und einen zweiten Förderbereich (18) für die zweite Teilfraktion (10) von Materialien definiert,
wobei das Fördermittel (11) einen Austragsabschnitt (19) aufweist, über den der erste und der zweite Förderbereich (17, 18) jeweils dazu bestimmt sind, den ersten bzw. den zweiten densimetrischen Tisch (6, 7) zu versorgen.

3. Aufbereitungsanlage nach dem vorhergehenden Anspruch, bei der die Fallrampe (12) einen Rampenabschnitt, den sogenannten Beschleunigungsabschnitt (20), umfasst, der den Sammelabschnitt (13) bis zum stromabwärtigen Ende (14) der Fallrampe (12) verlängert und dessen mittlere Neigung in Bezug auf die Vertikale einstellbar ist.

4. Aufbereitungsanlage nach Anspruch 2 oder 3, bei der sich die Trennwand (4) entlang einer Achse (A-A') der Längserstreckung erstreckt, um die die Trennwand (4) drehbar gelagert ist, wobei sich die Fallrampe (12) in Längsrichtung entlang der Achse (A-A') der Längserstreckung der Trennwand (4) erstreckt.

5. Aufbereitungsanlage nach dem vorhergehenden Anspruch, bei der die Trennwand (4) der Trommel (3) eine erste vertikale Ebene (P1) und eine zweite Ebene (P2) orthogonal zu einer ersten Ebene (P1 ) aufweist, wobei die erste und zweite Ebene (P1, P2) die Achse (A-A') der Längserstreckung der Trennwand (4) enthalten und, unterhalb der zweiten Ebene (P2), einen ersten und einen zweiten aufeinanderfolgenden Winkelsektor (28, 29) definieren, wobei der zweite Winkelsektor (29) in der Drehrichtung der Trennwand (4) stromabwärts des ersten Winkelsektors (28) angeordnet ist, wobei die Fallrampe (12) gegenüber dem zweiten Winkelsektor (29) positioniert ist.

6. Aufbereitungsanlage nach Anspruch 3 und einem der Ansprüche 4 und 5, wobei der Beschleunigungsabschnitt (20) der Fallrampe (12) eine durchschnittliche Neigung gegenüber der Vertikalen aufweist, die sich entlang der Achse (A-A') der Längserstreckung der Trennwand (4) ändert.

7. Aufbereitungsanlage nach einem der vorhergehenden Ansprüche, die stromaufwärts von der Aufbereitungseinheit (1) eine Einheit für den aeroben biologischen Abbau umfasst, die es ermöglicht, mindestens einen Teil der in der primären Abfallmischung (2A) enthaltenen biologisch abbaubaren Abfälle einem aeroben biologischen Abbauprozess zu unterziehen, um die biologisch abbaubaren Abfälle mindestens teilweise biologisch abzubauen und so die sekundäre Materialmischung (2B) zu bilden.

8. Aufbereitungsanlage nach einem der vorhergehenden Ansprüche, die stromaufwärts der Verarbeitungseinheit (1) eine Einheit für den anaeroben biologischen Abbau umfasst, die es ermöglicht, mindestens einen Teil der in der primären Abfallmischung (2A) enthaltenen biologisch abbaubaren Abfälle einem anaeroben biologischen Abbauprozess zu unterziehen, um die biologisch abbaubaren Abfälle mindestens teilweise biologisch abzubauen, so dass das gesamte oder ein Teil eines Restmaterials aus dem anaeroben biologischen Abbauprozess die sekundäre Materialmischung (2B) von Materialien bildet.

9. Aufbereitungsanlage nach einem der Ansprüche 7 und 8, wobei die aerobe(n) und/oder anaerobe(n) biologische(n) Abbaueinheit(en) mindestens eine Trocknungsbucht umfasst/umfassen, um die in der sekundären Materialmischung (2B) enthaltenen, zumindest teilweise biologisch abgebauten, biologisch abbaubaren Materialien einer Trocknung zu unterziehen.

10. Aufbereitungsanlage nach einem der Ansprüche 7 bis 9, bei der die Reihe von Trennöffnungen der Trennwand (4) der Trommel (3) mindestens Primäröffnungen umfasst, die zumindest einen Beitrag zur Trennung der sekundären Materialmischung (2B) in die erste Materialfraktion (5) und in die zweite, restliche Fraktion von Materialien durch Durchgang der ersten Materialfraktion (5) durch die Primäröffnungen ermöglichen, wobei letztere so bemessen sind, dass sie den Durchgang von Materialien mit einer Größe von mehr als 20 mm, vorzugsweise mehr als 15 mm, besonders bevorzugt mehr als 10 mm und noch bevorzugter mehr als 8 mm verhindern.

11. Aufbereitungsanlage nach dem vorhergehenden Anspruch, bei der die Reihe von Trennöffnungen auch sekundäre Öffnungen umfasst, die es ermöglichen, zur Trennung der sekundären Materialmischung (2B) von Materialien nach der ersten Materialfraktion (5) und nach der zweiten, restlichen Fraktion von Materialien durch den Durchgang der ersten Materialfraktion (5) durch die sekundären Öffnungen beizutragen, wobei die Abmessungen der letzteren so ausgelegt sind, dass sie den Durchgang von Materialien erlauben, deren Größe zwischen dem 1-fachen und 1 ,5-fachen und vorzugsweise dem 1,2-fachen der Größe der Materialien liegt, deren Durchgang durch die primären Öffnungen erlaubt ist, wobei die sekundären Öffnungen stromaufwärts von den primären Öffnungen angeordnet sind, unter Berücksichtigung der Zirkulationsrichtung der sekundären Materialmischung (2B) von Materialien.

12. Verfahren zur Behandlung eines primären Abfallgemisches (2A) aus einer Sammlung von Hausmüll und ähnlichen Abfällen, wobei ein nicht vernachlässigbarer Anteil der Masse des primären Abfallgemisches (2A) aus biologisch abbaubaren Abfällen gebildet wird, wobei das primäre Abfallgemisch (2A) biologisch nicht abbaubare Abfälle enthält, wobei das Verfahren einen Schritt E1 zur Behandlung einer sekundären Materialmischung (2B) umfasst, die aus der primären Abfallmischung (2A) erhalten wird, wobei ein nicht vernachlässigbarer Teil der Masse der sekundären Materialmischung (2B) durch biologisch abbaubare Materialien gebildet wird, wobei der Behandlungsschritt E1 nacheinander die folgenden Schritte umfasst:
- einen Schritt 01, in dem die sekundäre Materialmischung (2B) in eine drehbare Trommel (3) eingeführt wird, die mit einer Trennwand (4) versehen ist, die eine Reihe von durchgehenden Trennöffnungen aufweist, und Trennen der sekundären Materialmischung (2B) in eine erste Materialfraktion (5), die die Trennwand (4) durch die Reihe von Trennöffnungen passiert, und in eine zweite, restliche von Material, wobei die sekundäre Materialmischung (2B) entlang der Trennwand (4) zirkuliert, um auf diese Weise getrennt zu werden,
- einen Schritt 02, bei dem die erste Materialfraktion (5) mit Hilfe eines ballistischen Trennmittels (8) in mindestens eine erste und eine zweite Teilfraktion (9, 10) getrennt wird, wobei die erste Teilfraktion (9) aus Materialien gebildet wird, die eine mittlere Dichte aufweisen, die geringer ist als die mittlere Dichte der Materialien, die die zweite Teilfraktion (10) bilden, und
- einen Schritt 03, bei dem jede der ersten und zweiten Teilfraktionen (9, 10) von Materialien jeweils einer densimetrischen Sortierung unterzogen wird, und zwar mit Hilfe von mindestens einem ersten und einem zweiten densimetrischen Tisch (6, 7), die jeweils von dem ballistischen Trennmittel (8) beschickt werden.

13. Verarbeitungsverfahren nach dem vorhergehenden Anspruch, bei dem das genannte ballistische Trennmittel (8), das während des Schritts 02 eingesetzt wird, folgendes umfasst
- eine geneigte Fallrampe (12), die an einem stromaufwärtigen Ende einen Rampenabschnitt, den sogenannten Sammelabschnitt (13), umfasst, der gegenüber der Trennwand (4) der Trommel (3) positioniert ist, um die erste Materialfraktion (5) von Materialien zu sammeln, und ein gegenüberliegendes stromabwärtiges Ende (14), das über und in einem Abstand von einem Zuführabschnitt (15) des Fördermittels (11) positioniert ist, und
- mindestens eine ballistische Verteilerklappe (16), die auf einer Förderfläche des Fördermittels (11) mindestens einen ersten Förderbereich (17) für die erste Teilfraktion (9) von Materialien und einen zweiten Förderbereich (18) für die zweite Teilfraktion (10) von Materialien definiert,
wobei das Fördermittel (11) einen Austragsabschnitt (19) aufweist, über den der erste und der zweite Förderbereich (17, 18) jeweils den ersten bzw. den zweiten densimetrischen Tisch (6, 7) versorgen.

14. Verarbeitungsverfahren nach einem der Ansprüche 12 und 13, wobei mindestens ein Teil des in der primären Abfallmischung (2A) enthaltenen Abfalls einem aeroben biologischen Abbauprozess unterzogen wurde, so dass der biologisch abbaubare Abfall mindestens teilweise biologisch abgebaut wird und die sekundäre Materialmischung (2B) gebildet wird.

15. Verarbeitungsverfahren nach einem der Ansprüche 12 bis 14, wobei mindestens ein Teil des in der primären Abfallmischung (2A) enthaltenen Abfalls einem anaeroben biologischen Abbauprozess unterzogen wurde, so dass der biologisch abbaubare Abfall mindestens teilweise biologisch abgebaut wird, wobei die sekundäre Materialmischung (2B) aus dem gesamten oder einem Teil eines Restmaterials aus dem anaeroben biologischen Abbauprozess gebildet wird.

## Claims

1. A plant for treating a primary mixture (2A) of wastes from household and similar refuse collection, a non-negligible portion of the mass of said primary mixture (2A) of wastes being formed by biodegradable wastes, said primary mixture (2A) of wastes comprising non-biodegradable wastes, said treatment plant comprising a unit (1) for treating a secondary mixture (2B) of materials obtained from said primary mixture (2A) of wastes, a non-negligible portion of the mass of said secondary mixture (2B) of materials being formed by biodegradable materials, said treatment unit (1) comprising a rotary trommel (3) provided with a separation wall (4) with a series of separation through-holes for separating the secondary mixture (2B) of materials into a first fraction (5) of materials passing through said separation wall (4) via the series of separation holes and a second residual fraction of materials, the secondary mixture (2B) of materials being intended to flow along said separation wall (4) to be separated thereby, said treatment unit (1) also comprising at least one first and second densimetric tables (6, 7), and a ballistic separation means (8) positioned between said trommel (3) and said densimetric tables (6, 7) to collect said first fraction (5) of materials and feed the first and second densimetric tables (6, 7) with at least one first and second subfractions (9, 10) of materials, respectively, the first subfraction (9) of materials being formed of materials having an average density lower than an average density of the materials forming the second subfraction (10) of materials.

2. The treatment plant according to the preceding claim, wherein said treatment unit (1) comprises a conveyor means (11), which is positioned at a lower altitude than a respective altitude of the trommel (3), said ballistic separation means (8) comprising:
- an inclined drop ramp (12) comprising, at an upstream end, a ramp portion, called collecting portion (13), that is positioned opposite the separation wall (4) of the trommel (3) to collect said first fraction (5) of materials, and having an opposite, downstream end (14) that is positioned above and remote from a feed portion (15) of the conveyor means (11), and
- at least one ballistic distribution flap (16) that defines, on a conveying surface of said conveyor means (11), at least one first area (17) for conveying said first subfraction (9) of materials and a second area (18) for conveying said second subfraction (10) of materials,
said conveyor means (11) including an evacuation portion (19), through which the first and second conveying areas (17, 18) are able to feed each of said densimetric tables (6, 7), respectively.

3. The treatment plant according to the preceding claim, wherein said drop ramp (12) comprises a ramp portion, called acceleration portion (20), that extends said collecting portion (13) up to the downstream end (14) of the drop ramp (12), and whose average inclination is adjustable with respect to the vertical.

4. The treatment plant according to claim 2 or 3, wherein said separation wall (4) extends along a longitudinal axis of extension (A-A') about which said separation wall (4) is rotatably mounted, said drop ramp (12) extending longitudinally along said longitudinal axis of extension (A-A') of the separation wall (4).

5. The treatment plant according to the preceding claim, wherein the separation wall (4) of the trommel (3) has a first vertical plane (P1) and a second plane (P2) orthogonal to said first plane (P1), said first and second planes (P1, P2) containing the longitudinal axis of extension (A-A') of the separation wall (4) and defining, below said second plane (P2), a first and second consecutive angular sectors (28, 29), the second angular sector (29) being located downstream from the first angular sector (28) in the direction of rotation of the separation wall (4), the drop ramp (12) being positioned opposite said second angular sector (29).

6. The treatment plant according to claim 3 and any one of claims 4 and 5, wherein the acceleration portion (20) of the drop ramp (12) has an average inclination with respect to the vertical that varies along said longitudinal axis of extension (A-A') of the separation wall (4).

7. The treatment plant according to any one of the preceding claims, which comprises, upstream from said treatment unit (1), an aerobic biological degradation unit for applying an aerobic biological degradation process to at least part of the biodegradable wastes contained in said primary mixture (2A) of wastes, in order to biodegrade at least in part said biodegradable wastes and to thus form said secondary mixture (2B) of materials.

8. The treatment plant according to any one of the preceding claims, which comprises, upstream from said treatment unit (1), an anaerobic biological degradation unit for applying an anaerobic biological degradation process to at least part of the biodegradable wastes contained in said primary mixture (2A) of wastes, in order to biodegrade at least in part said biodegradable wastes, in such a way that all or part of a residual matter coming from said anaerobic biological degradation process forms said secondary mixture (2B) of materials.

9. The treatment plant according to any one of claims 7 and 8, wherein the aerobic and/or anaerobic biological degradation unit(s) comprise at least one drying rack making it possible to apply a drying to the biodegradable materials at least partially biodegraded contained in the secondary mixture (2B) of materials.

10. The treatment plant according to any one of claims 7 to 9, wherein the series of separation holes of the separation wall (4) of the trommel (3) comprises at least primary holes for at least contributing to separate the secondary mixture (2B) of materials into the first fraction (5) of materials and the second residual fraction of materials by passage of the first fraction (5) of materials through said primary holes, these latter having a suitable size to prevent the passage of materials larger than 20 mm, preferably larger than 15 mm, preferably larger than 10 mm, and more preferably larger than 8 mm.

11. The treatment plant according to the preceding claim, wherein said series of separation orifices also comprises secondary holes contributing to the separation of the secondary mixture (2B) of materials into the first fraction (5) of materials and into the second residual fraction of materials by passage of the first fraction (5) of materials throughout said secondary holes, these latter having a suitable size to enable the passage of materials the size of which is comprised between 1 times and 1.5 times, and preferably equal to 1.2 times, the size of the materials the passage of which is enabled by the primary holes, the secondary holes being arranged upstream from the primary holes with regards to the flow direction of the secondary mixture (2B) of materials.

12. A method for treating a primary mixture (2A) of wastes from household and similar refuse collection, a non-negligible portion of the mass of said primary mixture (2A) of wastes being formed by biodegradable wastes, said primary mixture (2A) of wastes comprising non-biodegradable wastes, said method comprising a step E1 of treating a secondary mixture (2B) of materials obtained from said primary mixture (2A) of wastes, a non-negligible portion of the mass of said secondary mixture (2B) of materials being formed by biodegradable materials, said treatment step E1 comprising the following successive steps:
- an operation O1 in which said secondary mixture (2B) of materials is introduced into a rotary trommel (3) provided with a separation wall (4) with a series of separation through-holes, and said secondary mixture (2B) of materials is separated into a first fraction (5) of materials passing through said separation wall (4) via the series of separation holes and a second residual fraction of materials, the secondary mixture (2B) of materials flowing along said separation wall (4) to be separated thereby,
- an operation O2 in which said first fraction (5) of materials is separated, using a ballistic separation means (8), into at least one first and second subfractions (9, 10) of materials, the first subfraction (9) of materials being formed of materials having an average density lower than the average density of the materials forming the second subfraction (10) of materials, and
- an operation O3 in which a densimetric sorting is applied to each of said first and second subfractions (9, 10) of materials, respectively, using at least one first and second densimetric tables (6, 7), each fed by said ballistic separation means (8).

13. The treatment method according to the preceding claim, wherein the ballistic separation means (8) implemented in operation O2 comprise:
- an inclined drop ramp (12) comprising, at an upstream end, a ramp portion, called collecting portion (13), that is positioned opposite the separation wall (4) of the trommel (3) to collect said first fraction (5) of materials, and an opposite, downstream end (14) that is positioned above and remote from a feed portion (15) of the conveyor means (11), and
- at least one ballistic distribution flap (16) that defines, on a conveying surface of said conveyor means (11), at least one first area (17) for conveying said first subfraction (9) of materials and a second area (18) for conveying said second subfraction (10) of materials,
said conveyor means (11) including an evacuation portion (19) through which the first and second conveying areas (17, 18) each feed said first and second densimetric tables (6, 7), respectively.

14. The treatment method according to any one of claims 12 and 13, wherein an aerobic biological degradation process has been applied to at least part of the wastes contained in said primary mixture (2A) of wastes, in order to biodegrade at least in part said biodegradable wastes and to form said secondary mixture (2B) of materials.

15. The treatment method according to any one of claims 12 to 14, wherein an anaerobic biological degradation process has been applied to at least part of the wastes contained in said primary mixture (2A) of wastes, in order to biodegrade at least part of said biodegradable wastes, said secondary mixture (2B) of materials being then formed of all or part of a residual matter resulting from said anaerobic biological degradation process.
